(19) Europäisches Patentamt
European Patent Office
Office européen des brevets

(11) **EP 2 652 462 B1**

(12) **EUROPÄISCHE PATENTSCHRIFT**

(45) Veröffentlichungstag und Bekanntmachung des Hinweises auf die Patenterteilung:
**24.08.2016 Patentblatt 2016/34**

(21) Anmeldenummer: **10795341.6**

(22) Anmeldetag: **16.12.2010**

(51) Int Cl.:
*G01F 23/284* (2006.01)     *G01F 23/26* (2006.01)
*G01F 23/296* (2006.01)

(86) Internationale Anmeldenummer:
**PCT/EP2010/069992**

(87) Internationale Veröffentlichungsnummer:
**WO 2012/079642 (21.06.2012 Gazette 2012/25)**

(54) **MESSVORRICHTUNG, STEUERVORRICHTUNG UND MESSGERÄT ZUR FÜLLSTANDMESSUNG**

MEASURING DEVICE, CONTROL DEVICE AND MEASURING INSTRUMENT FOR LEVEL MEASUREMENT

DISPOSITIF DE MESURE, DISPOSITIF DE COMMANDE ET APPAREIL DE MESURE POUR LA MESURE D'UN NIVEAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.10.2013 Patentblatt 2013/43**

(73) Patentinhaber: **VEGA Grieshaber KG**
**77709 Wolfach (DE)**

(72) Erfinder: **WELLE, Roland**
**77709 Oberwolfach (DE)**

(74) Vertreter: **Maiwald Patentanwalts GmbH**
**Elisenhof**
**Elisenstrasse 3**
**80335 München (DE)**

(56) Entgegenhaltungen:
**DE-A1- 10 103 056     DE-A1-102007 042 043**
**US-B1- 7 334 451**

**Beschreibung**

Gebiet der Erfindung

Die vorliegende Erfindung betrifft das Gebiet der Messtechnik und insbesondere betrifft die Erfindung eine Messvorrichtung, eine Steuervorrichtung, ein Messgerät, ein Verfahren zum Betreiben der Messvorrichtung, ein computerlesbares Speichermedium, eine Verwendung der Messvorrichtung zur Emulsionsmessung und eine Verwendung der Messvorrichtung zur Bestimmung von Medieneigenschaften.

Technischer Hintergrund

Bei den nach dem FMCW (Frequency Modulated Continuous Wave) oder Impuls - Laufzeitverfahren arbeitenden Füllstandsensoren werden elektromagnetische oder akustische Wellen in Richtung einer Füllgutoberfläche emittiert. Daran anschließend zeichnet ein Sensor die vom Füllgut, den Behältereinbauten und dem Behälter selbst reflektierten Echosignale auf, und leitet daraus den jeweiligen Füllstand ab.

Das Buch "Radar level measurement - The users guide", ISBN 0-9538920-0-X, von Peter Devine, VEGA Controls, 2000 beschreibt den prinzipiellen Aufbau von Radarfüllstandsensoren.

Die Druckschrift DE 10 2007 061 574 A1 beschreibt ein Verfahren zur Füllstandmessung, bei dem ein reflektierter Anteil eines Signals und eine Kapazität zwischen einer kapazitiven Sonde und einer Referenzelektrode gemessen wird.

Die Druckschrift DE 101 03 056 A1 beschreibt ein Flugzeug-Kraftstoffmengenmesssystem, welches eine Anzahl von Sonden innerhalb eines Tanks aufweist, um die Höhe des Kraftstoffs an verschiedenen Orten zu messen.

Die Druckschrift DE 10 2007 042 043 A1 betrifft eine Vorrichtung zur Ermittlung und Überwachung des Füllstands eines Füllguts in einem Behälter gemäß einer Laufzeitmessmethöde von ausgesendeten Signalen, bestehend aus einer Messumformereinheit und einer Sensoreirtheit.

In der Patentschrift US 7 334 451 B1 wird eine Methode zur Detektion eines schwachen Signals in einem mit geführten Radarwellen arbeitenden Messgerät beschrieben. Die Methode dient der Detektion einer Emulsionsschicht auf einer Fluidschicht.

Es mag der Bedarf bestehen ein effektives Messen insbesondere von Füllständen und Grenzständen sowie von Eigenschaften eines Füllgutes zu ermöglichen.

Zusammenfassung der Erfindung

Die vorliegende Erfindung betrifft eine Messvorrichtung, insbesondere eine Messvorrichtung zur Messung von Füllständen und/oder Grenzständen, eine Steuervorrichtung, ein Messgerät, ein Verfahren zum Betreiben der Messvorrichtung, die Verwendung der Messvorrichtung zur Emulsionsmessung und die Verwendung der Messvorrichtung zur Bestimmung von Medieneigenschaften, mit den in den unabhängigen Ansprüche 1, 10, 12, 13 und 14 angegebenen Merkmalen. Weitere besondere Ausführungsformen sind in den abhängigen Ansprüchen angegeben.

Gemäß einem Aspekt mag die Erfindung mit den Merkmalen der unabhängigen Ansprüche beschrieben werden. Weitere Aspekte mögen in den abhängigen Ansprüchen angegeben sein.

Beispielsweise mag gemäß einem Aspekt der vorliegenden Erfindung eine Messvorrichtung angegeben werden, welche eine erste Wellenführeinrichtung mit einer ersten Einkoppeleinrichtung und eine Vermesseinrichtung aufweist. Die erste Wellenführeinrichtung kann zum Durchführen einer ersten Messung und die Vermesseinrichtung kann zum Durchführen einer zweiten Messung eingerichtet sein. Die erste Wellenführeinrichtung mag ferner zum Unterteilen eines Behälterinnenraumes in zumindest einen ersten Raumbereich und einen zweiten Raumbereich eingerichtet sein. Darüber hinaus kann die erste Wellenführeinrichtung zum Führen einer ersten elektromagnetischen Welle in dein ersten Raumbereich, beispielsweise einer geführten Mikrowelle, eingerichtet sein, welche über die erste Einkoppeleinrichtung in die erste Wellenführeinrichtung eingekoppelt worden sein mag. Mit der ersten Messung mag sich in einem Beispiel ein Füllstand in dem ersten Raumbereich bestimmen lassen.

Die Vermesseinrichtung mag zum Durchführen der zweiten Messung an der ersten Wellenführeinrichtung oder an zumindest einem Teil der ersten Wellenführeinrichtung eingerichtet sein. Die zweite Messung kann in dem zweiten Raumbereich erfolgen. Insbesondere mag die Vermesseinrichtung zum Messen eines Füllstandes eingerichtet sein.

Zum Vermessen der ersten Wellenführeinrichtung, des zweiten Raumbereichs oder eines Füllstandes in dem zweiten Raumbereich mag die Vermesseinrichtung in einem Beispiel ebenfalls eine elektromagnetische Welle nutzen. Das Messsignal welches das Messverfahren der Vermesseinrichtung nutzen mag, kann über eine weitere Einkoppeleinrichtung in die Vermesseinrichtung eingekoppelt werden.

Die erste Wellenführeinrichtung mag zum Beabstanden der ersten Einkoppeleinrichtung der ersten Wellenführeinrichtung und der Vermesseinrichtung eingerichtet sein, so dass sich die erste elektromagnetische Welle in dem ersten Raumbereich in einem vorgebbaren Abstand von dem für die Durchführung der zweiten Messung mit der Vermesseinrichtung vorgesehenen zweiten Raumbereich ausbreiten kann. Der erste Raumbereich kann von dem zweiten Raumbereich verschieden sein. So mag sich der Füllstand an unterschiedlichen Orten mit unterschiedlichen Verfahren der Füllstandmessung mit einer gemeinsamen Messvorrichtung bestimmen lassen. Die Raumbereiche mögen in einem Beispiel disjunkt sein. In einem anderen Beispiel mögen die beiden Raumbereiche im Wesentlichen parallel zueinander verlaufen. Die Raumbereiche mögen an verschiedenen Orten entlang einer Richtung im Wesentlichen senkrecht zu einer Längsachse der ersten Wellenführeinrichtung oder senkrecht zu einer Ausbreitungsrichtung der ersten elektromagnetischen Welle angeordnet sein. Die erste Wellenführeinrichtung mag also sowohl zum Beabstanden der Raumbereiche als auch zum Beabstanden der Einkoppeleinrichtungen bzw. der Wellenführeinrichtungen und/oder der Vermesseinrichtung eingerichtet sein.

Gemäß einem anderen Aspekt der vorliegenden Erfindung mag die Messvorrichtung eine Abstandshalteeinrichtung aufweisen, wobei die Abstandshalteeinrichtung zum Beabstanden der ersten Einkoppeleinrichtung der ersten Wellenführeinrichtung und der Vermesseinrichtung eingerichtet ist. Die Abstandshalteeinrichtung mag zum Beabstanden der ersten Wellenführeinrichtung und der Vermesseinrichtung eingerichtet sein, so dass sich die erste elektromagnetische Welle in einem durch die Abstandshalteeinrichtung vorgebbaren Abstand von der Vermesseinrichtung ausbreiten kann. In anderen Worten mag die Anordnung der erste Wellenführeinrichtung und der Vermesseinrichtung in der Messvorrichtung eine Füllstandmessung innerhalb eines Behälters an unterschiedlichen Orten erlauben. Die Abstandshalteeinrichtung kann zusätzlich oder alleine für das Trennen der Raumbereiche sorgen, so dass sichergestellt werden mag, dass die erste Messung im Wesentlichen in dem ersten Raumbereich erfolgt und die zweite Messung im Wesentlichen in dem zweiten Raumbereich erfolgt.

Gemäß einem anderen Aspekt der vorliegenden Erfindung mag eine Steuervorrichtung angegeben werden. Die Steuervorrichtung mag eine Auswerteeinrichtung, eine erste Messeinrichtung mit einer ersten Anschlusseinrichtung und eine zweite Messeinrichtung mit einer zweiten Anschlusseinrichtung aufweisen. Ferner mag die Steuervorrichtung eine Anschtussabstandshalteeinrichtung und eine Sammelschnittstelle aufweisen. Die erste Messeinrichtung und die zweite Messeinrichtung mögen mit der Auswerteeinrichtung verbunden sein und zum Bereitstellen einer ersten elektromagnetischen Welle über die erste Anschlusseinrichtung bzw. zum Bereitstellen eines Messsignals zum Vermessen von zumindest einem Teil der ersten Wellenführeinrichtung über die zweite Anschlusseinrichtung eingerichtet sein. Das Messsignal kann an eine Vennesseinrichtung bereitgestellt werden.

Die erste Anschlusseinrichtung mag mittels der Anschlussabstandshalteeinrichtung von der zweiten Anschlusseinrichtung beabstandet sein, so dass die erste elektromagnetische Welle in einem durch die Anschlussabstandshalteeinrichtung vorgebbaren Abstand von dem Messsignal bereitgestellt werden kann. Die erste Messeinrichtung mag zum Ermitteln und Bereitstellen eines ersten Messwerts einer Messung mit der ersten elektromagnetischen Welle in einem ersten Raumbereich eingerichtet sein, wobei die Bereitstellung des ersten Messwerts an die Auswerteeinrichtung erfolgen mag. Die erste elektromagnetische Welle mag für den ersten Raumbereich bereitgestellt werden.

Die zweite Messeinrichtung mag zum Ermitteln und zum Bereitstellen eines zweiten Messwerts eingerichtet sein. Der zweite Messwert mag das Ergebnis einer Messung mit dem Messsignal in einem zweiten Raumbereich sein, wobei der zweite Messwert ebenfalls an die Auswerteeinrichtung bereitgestellt werden mag. Die Auswerteeinrichtung mag nach dem Empfang des ersten Messwerts und des zweiten Messwerts zum Umwandeln des ersten Messwerts und des zweiten Messwerts in einen gemeinsamen Messwert und zum Bereitstellen dieses gemeinsamen Messwerts an der Sammelschnittstelle eingerichtet sein. In anderen Worten mag in der Auswerteeinrichtung eine Aufarbeitung des ersten Messwerts einer ersten Messung und eines zweiten Messwerts einer zweiten Messung erfolgen, wobei die Auswertung nach vorgebbaren Kriterien erfolgen mag.

Als erster Messwert bzw. als zweiter Messwert kann auch eine Echokurve oder ein Reflexionssignal bereitgestellt werden. Aus dem Reflexionssignal kann die Echokurve generiert werden und aus der Echokurve kann ein Messwert oder ein Kennwert für den entsprechenden Raumbereich ermittelt werden kann. Eine Echokurve kann die Reflexionsverhältnisse in einem Raumbereich abbilden.

Zur Auswertung des ersten Messwerts und/oder des zweiten Messwerts mag die zugrunde gelegte Messmethode von der jeweiligen Messeinrichtung ermittelt werden. Eine Messeinrichtung oder die Steuervorrichtung mag den Typ einer angeschlossenen Messvorrichtung erkennen.

Die Art der Auswertung, insbesondere die Berechnungsmethode, mag auch über eine Einstelleinrichtung an der Steuervorrichtung einstellbar sein.

Gemäß einem anderen Aspekt der Erfindung mag ein Messgerät zur Füllstandmessung und/oder zur Grenzstandmessung oder Grenzwertmessung beschrieben werden. Das Messgerät mag die erfindungsgemäße Messvorrichtung und die erfindungsgemäße Steuervorrichtung aufweisen, wobei die Messvorrichtung mit der Steuervorrichtung elektrisch und/oder mechanisch verbunden oder angeschlossen sein mag. Ein mechanischer Anschluss mag beispielsweise über ein Schraubgewinde und/oder einen Bajonettanschluss hergestellt werden können.

Die Messvorrichtung und/oder die Steuervorrichtung mag somit zur Füllstandmessung oder zur Grenzstandmessung geeignet sein.

Gemäß noch einem anderen Aspekt der vorliegenden Erfindung mag ein Verfahren beschrieben werden, welches dem Betreiben der erfindungsgemäßen Messvorrichtung dienen mag. Das Verfahren mag das Bereitstellen einer ersten elektromagnetischen Welle in einer ersten Wellenführeinrichtung über eine erste Anschlusseinrichtung aufweisen. Die erste elektromagnetische Welle mag in einem ersten Raumbereich der ersten Wellenführeinrichtung bereitgestellt werden. Ferner mag das Verfahren das Vermessen von zumindest einem Teil der ersten Wellenführeinrichtung mit einem Messsignal aufweisen, welches über eine zweite Anschlusseinrichtung bereitgestellt wird. Das Vermessen der ersten Wellenführeinrichtung mit der Vermesseinrichtung mag in einem zweiten Raumbereich erfolgen. In einem Beispiel mag die erste Anschlusseinrichtung von der zweiten Anschlusseinrichtung mit einer Anschlussabstandshalteeinrichtung beabstandet sein.

Die erste elektromagnetische Welle und das Messsignal mögen örtlich getrennt für eine Messung bereitgestellt werden.

Im Wesentlichen nach dem Durchführen der Messungen mag ein erster Messwert einer Messung mit der ersten elektromagnetischen Welle an eine Auswerteeinrichtung bereitgestellt werden, und ein zweiter Messwert einer Messung mit dem Messsignal mag ebenfalls an die Auswerteeinrichtung bereitgestellt werden. Der erste Messwert und/oder der zweite Messwert mag auch eine ermittelte Echokurve in analoger oder digitaler Form sein. Die bereitgestellten ersten und zweiten Messwerte mögen in der Auswerteeinrichtung zu einem gemeinsamen Messwert umgewandelt oder zusammengefasst werden und dieser gemeinsame Messwert mag an einer Sammelschnittstelle der Auswerteeinrichtung bereitgestellt werden. Die Sammelschnittstelle mag in einem Beispiel eine externe Schnittstelle sein. In einem Beispiel kann die Auswerteeinrichtung auch ein Teil einer Ausgabeeinheit sein.

Die Steuervorrichtung mag als ein einziger integrierter Schaltkreis (IC) realisiert sein.

Gemäß noch einem anderen Aspekt der vorliegenden Erfindung mag eine Verwendung der Messvorrichtung und/oder der Steuervorrichtung zur Emulsionsmessung beschrieben werden.

Gemäß noch einem anderen Aspekt der vorliegenden Erfindung mag die Verwendung der Messvorrichtung und/oder der Steuervorrichtung zur Bestimmung von Medieneigenschaften beschrieben sein, insbesondere von Medieneigenschaften einer Flüssigkeit oder eines inhalts eines Behälters.

Es mag als ein Aspekt der vorliegenden Erfindung angesehen werden, dass mittels zumindest zweier im Wesentlichen in einem vorgebbaren Abstand durchgeführten Messungen Messergebnisse, Füllstände oder Echokurven bereitgestellt werden mögen, die im Wesentlichen denselben Sachverhalt wiedergeben mögen. Aufgrund unterschiedlicher Auswerteverfahren der mit den unterschiedlichen Messverfahren gewonnenen Messergebnisse mögen sich Parameter bestimmen lassen, mit denen sich eine Aussage machen lassen mag, die sich von einem Füllstand unterscheidet. Beispielsweise kann eine solche Aussage den Inhalt oder ein Mischungsverhältnis eines Inhalts eines Mediums in einem Behälter betreffen. Auch kann eine Trennschichtposition bestimmt werden. Ferner mag sich ein Kennwert für ein Überlagerungsmedium ermitteln lassen, welches sich oberhalb einer Füllgutoberfläche und/oder Trennschichtoberfläche befindet. Bei einem Überlagerungsmedium kann es sich um eine leichtere zweite Flüssigkeit handeln, die sich oberhalb einer ersten Flüssigkeit befindet, um Dampf, um ein Gas oder um ein Gasgemisch. Ein Kennwert kann eine Permeabilität, eine Permittivität, ein Druck, eine Temperatur oder ein Sättigungsgrad des Überlagerungsmediums sein.

Bei den zumindest zwei Messungen mag es sich um Messungen nach verschiedenen Messprinzipien handeln. Beispielsweise mag eine Laufzeit oder Reflexionsmessung durchgeführt werden. In einem anderen Beispiel mag eine Füllstandmessung auf Basis einer elektromagnetischen Welle durchgeführt werden. In einem exemplarischen Ausführungsbeispiel der vorliegenden Erfindung mag die Ausbreitung zweier elektromagnetischer Wellen an unterschiedlichen physikalischen Orten zur Ermittlung der interessierenden Kenngrößen genutzt werden. In einem weiteren Ausführungsbeispiel der vorliegenden Erfindung mag eine doppelte Füllstandmessung nach einem Laufzeitverfahren durchgeführt werden. In anderen Worten mag zum Vermessen mindestens ein Laufzeitmessverfahren oder Reflexionsmessverfahren mit einem beliebig anderen Messverfahren kombiniert werden. In einem exemplarischen Ausführungsbeispiel mag aber auch ein Laufzeitverfahren mit einem weiteren Laufzeitmessverfahren kombiniert werden. Der Unterschied der Messverfahren mag der Ort sein, an dem das jeweilige Verfahren durchgeführt werden mag. Die unterschiedlichen Orte mögen unterschiedliche Raumbereiche oder unterschiedliche Kanäle einer Messvorrichtung sein. Die Kanäle mögen innerhalb eines gemeinsamen Gehäuses der Messvorrichtung ausgebildet sein.

Gemäß einem anderen Aspekt der vorliegenden Erfindung mag die Messvorrichtung eine Vermesseinrichtung aufweisen, die eine zweiten Wellenführeinrichtung mit einer zweiten Einkoppeleinrichtung ist, wobei die zweite Wellenführeinrichtung zum Führen einer zweiten elektromagnetischen Welle eingerichtet sein mag, welche über die zweite Einkoppeleinrichtung in die zweite Wellenführeinrichtung eingekoppelt worden sein mag.

Gemäß noch einem anderen Aspekt der vorliegenden Erfindung mag die erste Wellenführeinrichtung und/oder die zweite Wellenführeinrichtung aus einer Gruppe von unterschiedlichen Wellenführeinrichtungen ausgewählt sein. Die Gruppe von Wellenführeinrichtungen mag aus einem Koaxialleiter, einem Hohlleiter, einem mit zumindest einer seitlichen Öffnung versehenen Hohlleiter, einer Führeinrichtung für eine Mikrowelle, einem Standrohr, einem Draht, einem Metallstab und einem Seil bestehen.

Die erste Wellenführeinrichtung und die Vermesseinrichtung, insbesondere die zweite Wellenführeinrichtung, mögen in einem gemeinsamen Gehäuse zusammengefasst sein. Beispielsweise mag auch die erste Wellenführeinrichtung in der Vennesseinrichtung oder die Vermesseinrichtung in der ersten Wellenführeinrichtung integriert sein. Die jeweils äußerste Einrichtung mag als ein Gehäuse für die gesamte Messvorrichtung dienen. Dadurch mag eine kompakete Bauform einer Sonde realisierbar sein, so dass sich die Sonde in nur einem einzigen Prozessanschluss eines Behälters unterbringen lässt. Ein Prozessanschluss mag eine Öffnung eines Behälters sein. Diese Öffnung kann auch mit einem Flansch zum Montieren der Messvorrichtung und/oder einer Steuervorrichtung versehen sein.

Das gemeinsame Gehäuse mag einen einfachen Transport der Messvorrichtung ermöglichen. In einem Beispiel mag es sich bei der Messvorrichtung um eine Sonde handeln. Das Zusammenfassen der Bestandteile der Sonde in einem gemeinsamen Gehäuse mag auch eine Montage der Sonde an einer Steuereinrichtung erleichtern. Die Abstände der Kanäle mögen bei einem Transport im Wesentlichen nicht beeinflusst werden.

Gemäß einem anderen Aspekt der vorliegenden Erfindung mag die Abstandshalteeinrichtung zumindest eine Abstandshalteeinrichtung ausgewählt aus der Gruppe von Abstandshalteeinrichtungen sein. Die Gruppe von Abstandshalteeinrichtungen mag aus einem Bügel, einem Flansch, einer Behälterwand, einer Wandung eines Hohlleiters und einem Isolator bestehen.

Die Abstandshalteeinrichtung mag die erste Wellenführeinrichtung und die Vermesseinrichtung im Wesentlichen in einem konstanten Abstand halten. Somit mag dieselbe Messgröße, beispielsweise der Stand einer Flüssigkeit in einem Behälter, an verschiedenen Orten bestimmt werden können. Die Lage der Orte mag im Wesentlichen durch den Abstandshalter bekannt sein. Durch spezielle Vorkehrungen, wie seitliche Öffnungen in einem Standrohr, mag dafür gesorgt werden, dass in den einzelnen Kanälen ein im Wesentlichen gleicher Flüssigkeitsstand gewährleistet sein mag.

Gemäß noch einem anderen exemplarischen Ausführungsbeispiel der vorliegenden Erfindung mögen die erste Wellenführeinrichtung und die Vermesseinrichtung, insbesondere die zweite Wellenführeinrichtung, koaxial angeordnet sein.

Mit einer koaxialen Anordnung der Wellenführeinrichtung und der Vermesseinrichtung. insbesondere der ersten Wellenführeinrichtung und der zweiten Wellenführeinrichtung, mag sich eine Integration der ersten Wellenführeinrichtung in die Vermesseinrichtung und umgekehrt realisieren lassen. Beispielsweise mag die erste Wellenführeinrichtung ein Metallstab sein und die Vermesseinrichtung die Außenwand eines Hohlleiters. Der Metallstab mag eine erste Längsachse aufweisen und der Hohlleiter mag eine zweite Längsachse aufweisen, wobei bei einer koaxialen Anordnung die Längsachsen der Wellenführeinrichtungen oder der Vermesseinrichtung im Wesentlichen aufeinander liegen.

Gemäß einem weiteren Aspekt der vorliegenden Erfindung mag die erste Wellenführeinrichtung und/oder zweite Wellenführeinrichtung ein Ende aufweisen, wobei durch dieses Ende eine Bezugslinie im Wesentlichen senkrecht zu einer Ausbreitungsrichtung der elektromagnetischen Welle verläuft, wobei die erste Einkoppeleinrichtung und die zweite Einkoppeleinrichtung in dem im Wesentlichen gleichen Abstand bezogen auf diese Bezugslinie angeordnet sind. Bei der Bezugslinie mag es sich um eine gedachte Bezugslinie handeln.

Somit mögen sich die Einkoppeleinrichtung in dem im Wesentlichen gleichen Abstand von einem Rohrende oder Sondenende befinden.

Gemäß noch einem anderen Ausführungsbeispiel der vorliegenden Erfindung mag die erste Einkoppeleinrichtung und/oder die zweite Einkoppeleinrichtung zumindest eine Einkoppeleinrichtung ausgewählt aus der Gruppe von Einkoppeleinrichtungen sein. Die Gruppe von Einkoppeleinrichtungen mag aus einem Streifenleiter, einem Lautsprecher, einem optischen Einkoppler, einem Laser, einem induktiven Einkoppler, einem kapazitiven Einkoppler, einer Schleifenkopplung, einer Stiftkopplung und einer Lochkopplung bestehen

Die Einkoppeleinrichtung mag geeignet sein ein Messsignal, insbesondere eine elektromagnetische Welle, eine akustische Welle oder eine optische Welle in der ersten Einkoppeleinrichtung und/oder der Vermesseinrichtung anzuregen, so dass sich das entsprechende Signal in der Vermesseinrichtung bzw. Wellenführeinrichtung ausbreiten kann.

Gemäß noch einem anderen Aspekt der vorliegenden Erfindung mag die erste Einhoppeleinrichtung und/oder die zweite Einkoppeleinrichtung eine Anschlusseinrichtung aufweisen, insbesondere eine erste Anschlusseinrichtung bzw. eine zweite Anschlusseinrichtung. Die Anschlusseinrichtungen mag jeweils zumindest eine Anschlusseinrichtung sein, welche aus der Gruppe von Anschlusseinrichtungen bestehend aus einem Hochfrequenzstecker, einer Hochfrequenzbuchse, einem Hochfrequenzadapter, einem Zirkulator und einem Richtkoppler ausgewählt sein mag.

Gemäß noch einem anderen Aspekt der vorliegenden Erfindung mag die Messvorrichtung als eine Sonde für ein Füllstandmessgerät und/oder für ein Grenzstandmessgerät ausgebildet sein.

Die Sonde mag beispielsweise einen Schraubanschluss oder einen Bajonettanschluss aufweisen, mit dem sie an eine passende Steuervorrichtung angeschlossen werden kann, um ein Messgerät oder ein Feldgerät zu formen, insbesondere ein Feldgerät für die Füllstandmessung oder für Grenzstandmessung.

Gemäß noch einem anderen Aspekt mag ein Messsignal eine zweite elektromagnetische Welle sein.

Das Vermessen der ersten Wellenführeinrichtung mag somit im Wesentlichen mittels einer geführten elektromagnetischen Welle erfolgen.

Die Vermesseinrichtung kann also ein weiteres Laufzeitmessverfahren oder Reflexionmessverfahren nutzen.

Gemäß noch einem anderen Ausführungsbeispiel der vorliegenden Erfindung mag die Steuervorrichtung einen gemeinsamen Generator zum Erzeugen der elektromagnetischen Welle und des Messsignals und insbesondere der ersten elektromagnetischen Welle und der zweiten elektromagnetischen Welle aufweisen. Darüber hinaus mag die Steuervorrichtung eine Verteileinrichtung aufweisen, wobei die Verteileinrichtung zum Verteilen der ersten elektromagnetischen Welle an die erste Anschlusseinrichtung und der zweiten elektromagnetischen Welle an die zweite Anschlusseinrichtung eingerichtet sein mag.

Gemäß einem anderen Aspekt der vorliegenden Erfindung mag das Verfahren zum Betreiben der Messvorrichtung das Bereitstellen einer zweiten elektromagnetischen Welle als Messsignal aufweisen. Die zweite elektromagnetische Welle mag über die zweite Anschlusseinrichtung bereitgestellt werden. Es mag sodann ein zweiter Messwert einer Messung mit der zweiten elektromagnetischen Welle an die Auswerteeinrichtung bereitgestellt werden können.

Es soll angemerkt werden, dass unterschiedliche Aspekte der Erfindung mit Bezug auf unterschiedliche Gegenstände beschrieben sind. Insbesondere sind einige Aspekte mit Bezug auf Vorrichtungsansprüche beschrieben, wohingegen andere Aspekte mit Bezug auf Verfahrensansprüche beschrieben sind. Ein Fachmann mag jedoch der vorangehenden Beschreibung und der folgenden Beschreibung entnehmen können, dass, außer es wird anders beschrieben, zusätzlich zu jeder Kombination von Merkmalen, die zu einer Kategorie von Gegenständen gehört, auch jede Kombination zwischen Merkmalen als von diesem Text offenbart angesehen werden mag, die sich auf unterschiedliche Kategorien von Gegenständen bezieht. Insbesondere mögen Kombinationen zwischen Merkmalen von Vorrichtungsansprüchen und Merkmalen von Verfahrensansprüchen offenbart sein.

Kurze Beschreibung der Figuren

Im Folgenden werden weitere exemplarische Ausführungsbeispiele der vorliegenden Erfindung mit Verweis auf Figuren beschrieben.

Fig. 1 zeigt eine Messanordnurig zur Füllstandmessung mit einem Standrohr und einem Messstab nach dem Verfahren der geführten Mikrowelle zum besseren Verständnis der vorliegenden Erfindung.

Fig. 2 zeigt drei Auswertekurven zur Echosignalverarbeitung zum besseren Verständnis der vorliegenden Erfindung.

Fig. 3 zeigt eine Messanordnung mit einem Messstab nach dem Prinzip der geführten Mikrowelle zum Besseren Verständnis der vorliegenden Erfindung.

Fig. 4 zeigt eine Anordnung mit einem Standrohr zur Füllstandmessung nach dem freistrahlenden Radarprinzip zum besseren Verständnis der vorliegenden Erfindung

Fig. 5 zeigt eine Messanordnung zur Füllstandmessung mittels einer freistrahlenden elektromagnetischen Welle und einer geführten Mikrowelle gemäß einem exemplarischen Ausführungsbeispiel.

Fig. 6 zeigt eine Messanordnung zur Füllstandmessung mit zwei elektromagnetischen Wellen nach dem Prinzip der geführten Mikrowelle gemäß einem exemplarischen Ausführungsbeispiel der vorliegenden Erfindung.

Fig. 7 zeigt eine weitere Messanordnung zum Messen eines Füllstandes mit zwei elektromagnetischen Wellen nach dem Prinzip der geführten Mikrowelle gemäß einem exemplarischen Ausführungsbeispiel der vorliegenden Erfindung.

Fig. 8 zeigt eine Messanordnung zur Messung einer Emulsion gemäß einem exemplarischen Ausführungsbeispiel der vorliegenden Erfindung.

Fig. 9 zeigt eine Messanordnung zur Bestimmung von Medieneigenschaften bei der Füllstandmessung gemäß einem exemplarischen Ausführungsbeispiel der vorliegenden Erfindung.

Fig. 10A zeigt ein einfaches Blockschaltbild einer Steuervorrichtung gemäß einem exemplarischen Ausführungsbeispiel der vorliegenden Erfindung.

Fig. 10B zeigt ein detailliertes Blockschaltbild einer Steuervorrichtung mit getrennten Signalwegen gemäß einem exemplarischen Ausführungsbeispiel der Erfindung.

Fig. 10C zeigt ein detailliertes Blockschaltbild einer Steuervorrichtung mit einer gemeinsamen Auswerteeinheit und einer gemeinsamen Ausgabeeinheit gemäß einem exemplarischen Ausführungsbeispiel der vorliegenden Erfindung.

Fig. 10D zeigt ein detailliertes Blockschaltbild einer Steuervorrichtung mit einem Analogschalter gemäß einem exemplarischen Ausführungsbeispiel der vorliegenden Erfindung.

Fig. 10E zeigt ein detailliertes Blockschaltbild einer Steuervorrichtung mit einem Hochfrequenzumschalter gemäß einem exemplarischen Ausführungsbeispiel der vorliegenden Erfindung.

Fig. 11 zeigt eine Draufsicht der Messvorrichtung aus Fig. 6 gemäß einem exemplarischen Ausführungsbeispiel der vorliegenden Erfindung.

Fig. 12 zeigt ein Flussdiagramm für ein Verfahren zum Betreiben einer Messvorrichtung gemäß einem exemplarischen Ausführungsbeispiel der vorliegenden Erfindung.

Detaillierte Beschreibung von Ausführungsbeispielen

Die Darstellungen in den Figuren sind schematisch und nicht maßstäblich.

Eine Messvorrichtung kann beispielsweise eine erste Wellenführeinrichtung und eine Vermesseinrichtung oder eine erste Wellenführeinrichtung und eine zweite Wellenführeinrichtung aufweisen, welche als zwei Geräte realisiert sind. Die Geräte können unterschiedliche Messprinzipien nutzen. Mit einem Standröhr kann eine Mikrowelle geführt werden, es läßt sich aber auch eine Kapazität des Standrohres messen.

Bei der Verwendung akustischer oder optischer Wellen breitet sich das vom Füllstandmessgerät oder der Steuervorrichtung erzeugte Signal im Allgemeinen frei in Richtung der zu vermessenden Füllgutoberfläche aus. Bei einer Einrichtung oder einem Gerät, welches Radarwellen zur Vermessung der Füllgutoberfläche benutzt, kommt sowohl eine freie Ausbreitung in Richtung des zu vermessenden Mediums, welches die Füllgutoberfläche bilden kann, in Betracht, als auch eine Ausbreitung entlang einer Führungseinrichtung, wie beispielsweise das Innere eines Hohlleiters, welche die Radarwellen vom Füllstandmessgerät, insbesondere von der Steuervorrichtung oder der Einkoppeleinrichtung, zum Medium führt. Bei Geräten nach dem Prinzip der geführten Mikrowelle werden die hochfrequenten Signale im Inneren oder entlang der Oberfläche eines Wellenleiters zum Medium hin geführt.

An der Oberfläche des zu vermessenden Mediums wird ein Teil der ankommenden Signale reflektiert, und gelangt nach einer entsprechenden Laufzeit wieder zurück zum Füllstandmessgerät, insbesondere zur Steuervorrichtung eines Füllstandmessgeräts oder eines Feldgeräts. Die nicht reflektierten Signalanteile dringen in das Medium ein, und breiten sich entsprechend den physikalischen Eigenschaften des Mediums in diesem weiter in Richtung des Behälterbodens aus. Am Behälterboden werden diese Signale reflektiert, und gelangen nach Passage des Mediums und der überlagerten Atmosphäre oder des Überlagerungsmediums wieder zurück zum Füllstandmessgerät, insbesondere zu einer ersten Messeinrichtung oder zu einer zweiten Messeinrichtung.

Die Messeinrichtung empfängt die an verschiedenen Stellen reflektierten Signale und bestimmt daraus nach einem Laufzeitmessverfahren die Distanz zum Füllgut.

Die bestimmte Distanz zum Füllgut wird nach außen hin über eine externe Schnittstelle bereitgestellt. Die Bereitstellung kann in analoger Form, beispielsweise als 4..20 mA Signal an einer 4..20 mA Schnittstelle, oder auch in digitaler Form, beispielsweise auf einem Feldbus, realisiert werden. Ein Feldbus kann ein HART®-Bus, ein Profibus oder ein Fieldbus Foundation ™ Feldbus sein. Ein weiteres Beispiel einer Schnittstelle kann die I$^2$C (Inter-Integrated Circuit) Schnittstelle oder eine Computerschnittstelle wie RS232, RS485, USB (Universal Serial Bus), Ethernet, FireWire oder WLAN (Wireless Local Area Network) sein.

Eine Füllstandmessung, Trennschichtmessung und/oder Emulsionsmessung kann auf unterschiedliche Art und Weise erfolgen. Beispielsweise kann eine Anordnung zur Füllstandmessung, Trennschichtmessung und/oder Emulsionsmessung zumindest eine Messvorrichtung und/oder eine Steuervorrichtung aufweisen, welche den Füllstand nach dem Prinzip der geführten Mikrowelle bestimmt. In einem anderen exemplarischen Ausführungsbeispiel ist jedoch auch möglich, eine Vorrichtung zu realisieren, die als Messprinzip in Ergänzung zu der geführten Mikrowelle oder alternativ dazu zumindest ein akustisches Messprinzip, ein optisches Messprinzip, ein induktives Messprinzip, ein kapazitives Messprinzip oder ein im Wesentlichen freistrählendes Messprinzip nutzt, insbesondere unter Verwendung frei strahlender Radarwellen.

Es mag ein Aspekt der Erfindung sein, eine Vorrichtung oder Sonde zu schaffen, die es erlaubt im Wesentlichen gleichzeitig zumindest zwei gleiche oder unterschiedliche Messprinzipien mit nur einer einzigen Vorrichtung zu nutzen.

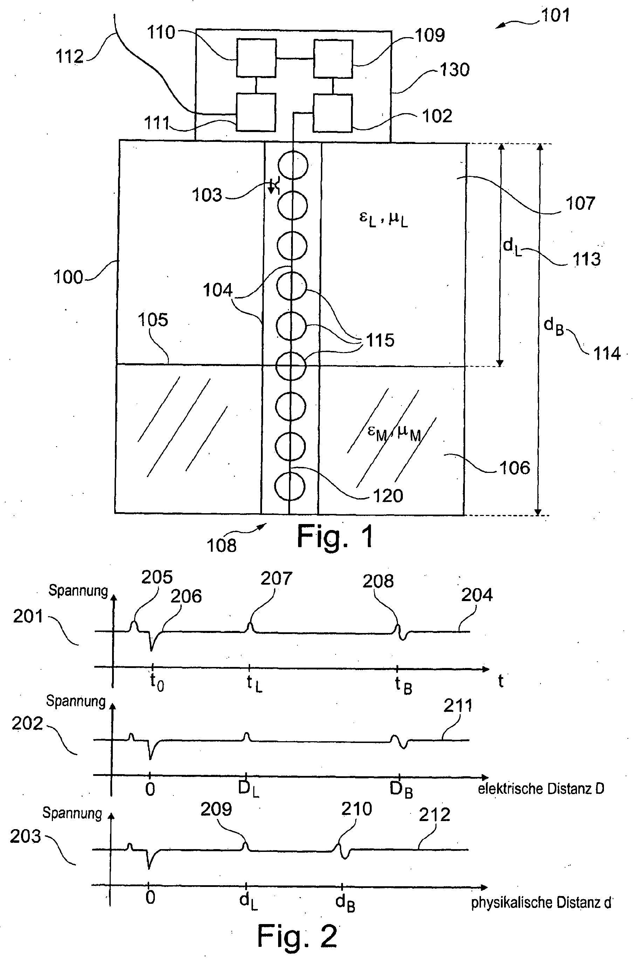

Die Fig. 1 zeigt eine Anordnung zur Füllstandmessung nach dem Prinzip einer geführten Mikrowelle. Die Anordnung der Fig. 1 nutzt ein koaxiales Standrohr 104 mit Innenleiter zur Füllstandsmessung. Der Behälter 100 ist bis zu einer Füllhöhe $d_B$ - $d_L$ mit einem Medium M 106 oder einer Flüssigkeit 106 gefüllt. Die Füllhöhe berechnet sich aus einer Differenz zweier Abstände ausgehend von einer Bezugshöhe, beispielsweise dem Ort der Einkopplung der Mikrowelle. Der Raum über der Flüssigkeit 107 sei zunächst mit einem weiteren Medium gefüllt, beispielsweise mit Luft L.

Die zu messende Flüssigkeit 106 und die Überlagerungsatmosphäre 107 befinden sich im Wesentlichen im Behälterinnenraum.

Ein nach dem Prinzip der geführten Mikrowelle arbeitendes Füllstandmessgerät 101 erzeugt in einer Steuervorrichtung 130 mit Hilfe einer Hochfrequenzeinheit 102 einen elektromagnetischen Impuls 103 und koppelt diesen in eine Sonde 104 ein, die in der in Fig. 1 dargestellten Anordnung als Wellenleiter 104 ausgebildet ist, woraufhin sich dieser Impuls annähernd mit Lichtgeschwindigkeit in Richtung der zu vermessenden Füllgutoberfläche 105 im Inneren des Wellenleiters 104 ausbreitet.

Der dargestellte Wellenleiter 104 ist im vorliegenden Beispiel in Form eines Koaxialleiters ausgeführt. Als Sonde kommt jedoch jede Form eines Wellenleiters in Frage, also insbesondere Eindraht- oder Mehrdrahtleitungen.

Der für die Füllstandmessung verwendete Koaxialleiter 104 weist ein Rohr auf, welches in gleichmäßigen Abständen mit Bohrungen 115 in der Rohrwand versehen ist, welche ein Eindringen der zu messenden Flüssigkeit 106 in den Bereich zwischen dem Außenleiter , z.B. der Wandung des Rohres 104, und dem Innenleiter 120 ermöglichen.

Die Füllgutoberfläche 105 reflektiert einen Teil der ankommenden Signalenergie, woraufhin sich der reflektierte Signalanteil entlang des Wellenleiters 104 wieder zurück zum Füllstandmessgerät 101 und insbesondere zur Auswerteeinrichtung des Füllstandmessgeräts fortpflanzt. Der nicht reflektierte Signalanteil dringt in die Flüssigkeit 106 ein, und pflanzt sich darin mit stark verminderter Geschwindigkeit entlang des Wellenleiters 104 fort. Die Geschwindigkeit $c_{Medium}$ der elektromagnetischen Welle 103 innerhalb der Flüssigkeit 106 wird durch die Materialeigenschaften der Flüssigkeit 106 bestimmt:

$$c_{Medium} = \frac{c_0}{\sqrt{\varepsilon_R \cdot \mu_R}}$$

wobei $c_0$ die Lichtgeschwindigkeit im Vakuum, $\varepsilon_R$ die Permittivitätszahl der Flüssigkeit und $\mu_R$ die Permeabilitätszahl der Flüssigkeit beschreibt. Am unteren Ende 108 des Wellenleiters 104 in einem Bodenbereich des Behälters 100 wird der verbliebene Signalanteil ebenfalls reflektiert, und gelangt nach einer entsprechenden Laufzeit wieder zurück zum Füllstandmessgerät 101, insbesondere zur Steuervorrichtung 130. Im Füllstandmessgerät 101, insbesondere in der Steuervorrichtung 130, werden die ankommenden Signale mit Hilfe der Hochfrequenzeinheit 102 aufbereitet, und beispielsweise in einen niederfrequenteren Zwischenfrequenzbereich (ZF-Bereich) transformiert. Mit Hilfe einer Analog-Digital-Wandlereinheit 109 (A/D-Wandler) werden die analogen Echokurven, welche von der Hochfrequenzeinheit 102 bereitgestellt werden, digitalisiert und einer Auswerteeinheit 110 zur Verfügung gestellt. Die Auswerteeinheit 110 analysiert die digitalisierte Echokurve, bestimmt auf Basis der darin enthaltenen Echos nach vorgebbaren Verfahren dasjenige Echo, das von der Reflexion an der Füllgutoberfläche 105 erzeugt wurde. Zudem bestimmt die Auswerteeinheit 110 die im Wesentlichen exakte Distanz bis zu diesem Echo. Weiterhin wird die im Wesentlichen exakte Distanz zum Echo derart korrigiert, dass Einflüsse der überlagerten Gasatmosphäre 107 auf die Ausbreitung der elektromagnetischen Wellen kompensiert werden. Die so errechnete, kompensierte Distanz zum Füllgut 113 wird an eine Ausgabeeinheit 111 bereitgestellt, welche den bestimmten Wert entsprechend den Vorgaben des Benutzers weiter aufbereitet, beispielsweise durch Linearisierung, Offsetkorrektur. Umrechnung in eine Füllhöhe $d_B$ - $d_L$. Der aufbereitete Messwert wird an einer externen Kommunikationsschnittstelle 112 nach außen hin bereitgestellt. Zur Bereitstellung kann eine beliebige Schnittstelle verwendet werden, insbesondere eine 4..20mA - Stromschnittstelle, ein industrieller Feldbus wie HART®, Profibus, Fieldbus Foundation ™ (FF), oder aber auch eine Computerschnittstelle wie RS232, RS485, USB (Universal Serial Bus), Ethernet oder FireWire.

Die Fig. 2 verdeutlicht Schritte, die im Rahmen der Echosignalverarbeitung in der Auswerteeinheit 110 zur Kompensation der Einflüsse verschiedener Medien angewendet werden. Teile dieser Schritte können bei der Auswertung von Echosignalen genutzt werden.

Kurvenzug 201 zeigt zunächst die von der Analog-Digital-Wandlereinheit 109 über der Zeit hinweg erfasste und aus den Reflexionssignalen gewonnene Echokurve 204. Die Echokurve beinhaltet zunächst den Sendeimpuls 205. Kurze Zeit später wird zum Zeitpunkt $t_0$ eine erste Reflektion 206 erfasst, welche durch die Einkopplung des Hochfrequenzsignals auf den Wellenleiter 104 verursacht wird, z.B. von einer Einkoppeleinrichtung. Eine weitere Reflektion 207 entstammt der Füllgutoberfläche 105 und wird zum Zeitpunkt $t_L$ erfasst. Das vom unteren Ende 108 des Wellenleiters 104 erzeugte Echo 208 wird schließlich zum Zeitpunkt $t_B$ erfasst.

In einem ersten Verarbeitungsschritt wird die zeitabhängige Kurve 204 in eine distanzabhängige Kurve 211 transformiert. Während dieser Transformation wird davon ausgegangen, dass sich die erfasste Kurve 204 ausschließlich durch eine Ausbreitung im Vakuum gebildet hat. Die Ordinate der ersten Darstellung 201 wird durch Multiplikation mit der Lichtgeschwindigkeit im Vakuum in eine Distanzachse der zweiten Darstellung 202 umgerechnet. Diese Distanzachse gibt die elektrische Distanz an. Zudem wird durch Verrechnung eines Offsets erreicht, dass das von der Einkopplung des Hochfrequenzsignals verursachte Echo 206 den Distanzwert 0m erhält.

Die zweite Darstellung 202 zeigt die Echokurve 211 als Funktion der elektrischen Distanz D. Die elektrische Distanz entspricht derjenigen Distanz, die eine elektromagnetische Welle im Vakuum in einer bestimmten Zeit zurücklegt. Die elektrische Distanz berücksichtigt im Wesentlichen keinerlei Einflüsse eines Mediums, welche möglicherweise zu einer langsameren Ausbereitung der elektromaanetischen Wellen führen. Der Kurvenzug 211 stellt daher eine unkompensierte, aber auf Orte bezogene Echokurve dar.

In dem vorliegenden Text mögen elektrische Distanzen mit Großbuchstaben D bezeichnet werden, wohingegen physikalische Distanzen, welche direkt am Behälter nachgemessen werden können, mit kleinen Buchstaben d bezeichnet werden mögen. Die physikalische Distanz $d_L$, $d_B$, 113,114 kann am Behälter nachgemessen werden.

Es mag weiterhin möglich sein, die Echokurve 211 im Wesentlichen vollständig zu kompensieren, d.h. die Echokurve im Wesentlichen vollständig auf eine physikalische Distanz zu beziehen. Die dritte Darstellung 203 in Fig. 2 zeigt eine solche vollkompensierte Echokurve 212 der Echokurve 211. Um eine Darstellung der Echos über der physikalischen Distanz zu erreichen, wird im vorliegenden Fall der Einfluss des Überlagerungsmediums 107 im Bereich zwischen den Orten 0 und $D_L$ des Kurvenzugs 211 berücksichtigt. Die elektrischen Distanzangaben der Abszisse werden zwischen 0 und $D_L$ in physikalische Distanzangaben gemäß folgendem Zusammenhang umgerechnet:

$$d_i = \frac{D_i}{\sqrt{\varepsilon_L \cdot \mu_L}}$$

$i$ stellt hierbei einen Laufindex für Distanzwerte zwischen den Orten 0 und $D_L$ dar. Da $\varepsilon_{Luft}$ und $\mu_{Luft}$ in guter Näherung im Wesentlichen etwa dem Wert 1 entsprechen, muss für diesen Abschnitt im vorliegenden Beispiel im Wesentlichen keine Korrektur erfolgen. Die elektrischen Distanzangaben der Abszisse zwischen $D_L$ und $D_B$, die dem mit dem von Luft verschiedenem Medium gefüllten Bereich des Behälters entsprechen, werden jedoch in physikalische Distanzangaben gemäß folgendem Zusammenhang umgerechnet:

$$d_i = d_L + \frac{(D_i - D_L)}{\sqrt{\varepsilon_M \cdot \mu_M}}$$

$i$ stellt hierbei einen Laufindex für Distanzwerte zwischen den Orten $D_L$ und $D_B$ dar.

Die dritte Darstellung 203 einer Echokurve zeigt den korrigierten Verlauf oder den kompensierten Verlauf der erfassten Echokurve 204. Sowohl die Distanz $d_L$ zum Echo 209 der Füllgutoberfläche 105 als auch die Distanz $d_B$ des vom unteren Ende 108 des Wellenleiters 104 erzeugten Echos 210 stimmen im Wesentlichen mit den am Behälter 100 nachmessbaren Distanzen $d_L$, $d_B$, 113, 114 überein.

Die Umsetzung des erfassten Kurvenzugs 204 in den Kurvenzug 211, also die Bestimmung der elektrischen Distanzen verschiedener Echos, wird im Rahmen der Signalverarbeitung 102, 109, 110, 111 im Gerät 101, insbesondere in dessen Steuervorrichtung 130, im Wesentlichen für alle erfassten Echos 205, 206, 207, 208 durchgeführt. Die Umsetzung der Echokurve 211 in eine kompensierte Echokurve 212 wird im Allgemeinen nicht durchgeführt, genügt doch die Korrektur eines einzelnen Füllstandwertes. In anderen Worten mag in der nicht kompensierten Kurve 211 lediglich das Echo der Füllgutoberfläche 105 oder das am unteren Ende des Wellenleiters erzeugt Echo kompensiert werden.

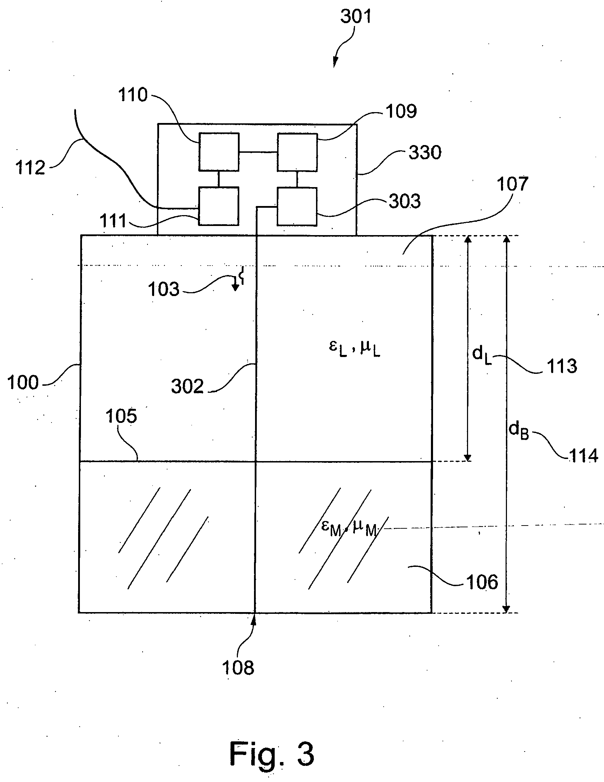

Fig. 3 zeigt eine weitere Anordnung 301 zur Füllstandmessung nach dem Prinzip der geführten Mikrowelle. Die Füllstandmessung erfolgt in dieser Anordnung mit einem Einzelleiter 302. Die Vorrichtung unterscheidet sich durch ein verändertes Füllstandmessgerät 301, welches an Stelle des Koaxialleiters 104 als Sonde 302 einen Metallstab 302 zur Führung eines von der Hochfrequenzeinheit 303 der Steuervorrichtung 330 erzeugten Hochfrequenzsignals 103 nutzt. In anderen Worten mag das Füllstandmessgerät 301 eine Steuervorrichtung 330 und eine Sonde 302 aufweisen.

Aufgrund der physikalischen Gesetzmäßigkeiten kann sich das Hochfrequenzsignal 103 im Wesentlichen nicht im Inneren des massiven Metallstabes 302 fortpflanzen, sondern bewegt sich entlang der äußeren Oberfläche des Stabes, insbesondere zwischen Stab und Behälterwand. Die mit dieser Anordnung erzeugbaren Echosignale 204, 211, 212 entsprechen in grober Näherung im Wesentlichen denen aus Fig. 2, weshalb sich die Auswertung der Signale und somit die Steuervorrichtung 330 im Wesentlichen nicht von der in der Fig. 1 dargestellten Steuervorrichtung 130 unterscheidet.

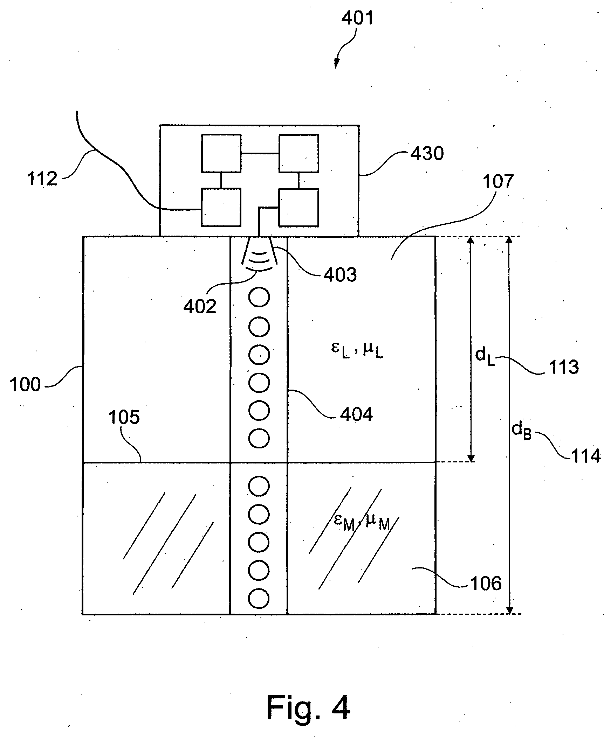

Fig. 4 zeigt eine weitere Vorrichtung 401 zur Füllstandmessung, welche nach dem freistrahlenden Radarprinzip ausgeführt ist. Für eine Füllstandmessung nach dem freistrahlenden Radarprinzip kann ein Standrohr 404 genutzt werden, um eine Führung der Radarstrahlen oder allgemein einer elektromagnetischen Welle zu erzielen. Das Füllstandmessgerät 401, welches der Füllstandmessung nach dem freistrahlenden Radarprinzip genügt, mag die Steuervorrichtung 430 zur Erzeugung und Auswertung eines Radarsignals und die Sonde 404 oder das Standrohr 404 aufweisen. Das Füllstandmessgerät 401 strahlt das Radarsignal 402 über die Einkoppeleinrichtung 403 oder Antenne 403 in das Innere des Standrohres 404 ab, woraufhin sich dieses Radarsignal entsprechend den physikalischen Gesetzmäßigkeiten innerhalb des Standrohres 404 ausbreitet. Ein Betrieb ohne Standrohr ist auch möglich, wobei dann die freistrahlende Radarwelle im Wesentlichen von der Behälterinnenwand geführt wird. Die vom Füllgut 105 insbesondere dessen Oberfläche reflektierten Signale dienen wiederum der Bestimmung des eigentlichen Füllstandes 113 im Behälter 100. Die Anordnung nach Fig. 4 lässt sich auch dazu nutzen, den Füllstand mit Hilfe von akustischen Signalen oder optischen Signalen im Standrohr zu erfassen.

Bei den in den Figuren Fig. 1, Fig. 3 und Fig. 4 dargestellten Anordnungen kommt jeweils nur eine Messung oder ein einziges Messprinzip zur Vermessung des Füllstandes unter Verwendung eines Standrohres zum Einsatz. Bei diesen Messungen mit nur einem einzigen Messprinzip handelt es sich um eine einkanalige Messung. Eine mehrkanalige Messung im Umfeld der Füllstalldmesstechnik kann jedoch ein effektives Auswerten von Echokurven bieten. Bei einer mehrkanaligen Messung mag ein mehrkanaliges Messgerät genutzt werden. Ein mehrkanaliges Messgerät mag eine mehrkanalige Sonde, eine mehrkanalige Messvorrichtung und/oder eine mehrkanaligen Steuervorrichtung nutzen. In Kombination mit einer entsprechend angepassten Steuervorrichtung kann statt oder in Ergänzung zu einem Messwert, der den Füllstand angibt, ein weiterer Parameter angegeben werden, wie beispielsweise eine Materialeigenschaft oder ein Mischungsverhältnis eines Mediums. Der Messwert und/oder Parameter kann an einer Sammelschnittstelle bereitgestellt werden.

Die Messvorrichtung, insbesondere die mehrkanalige Messvorrichtung oder mehrkanalige Sonde, kann zur Füllstandmessung und/oder Trennschichtmessung und/oder Emulsionsmessung genutzt werden.

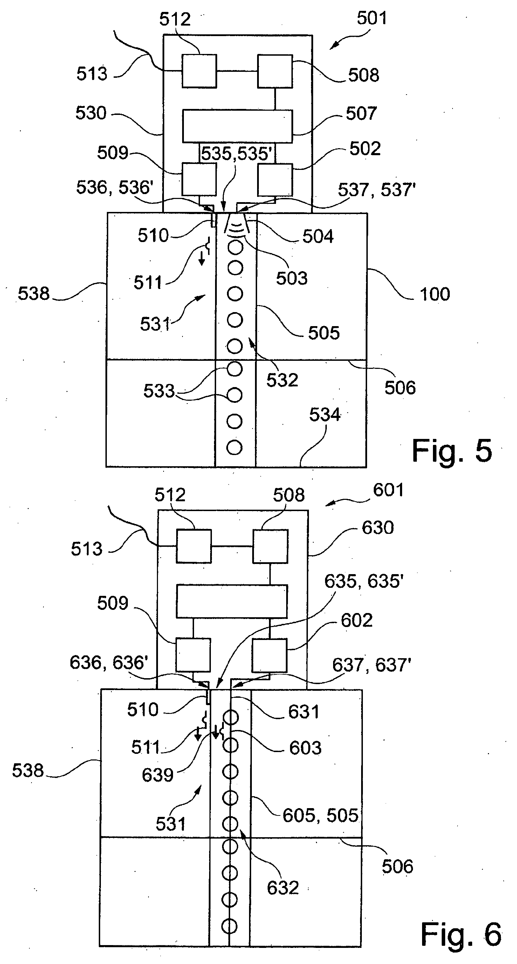

Fig. 5 zeigt eine Ausführungsform eines mehrkanaligen Messgeräts 501 mit einer mehrkanaligen Messvorrichtung 505 und einer mehrkanaligen Steuervorrichtung 530 gemäß einem exemplarischen Ausführungsbeispiel. Die mehrkanalige Messvorrichtung 505 weist einen ersten Kanal 509, 510, 531 und einen zweiten Kanal 502, 504, 532 auf. Mittels eines Standrohrs 505 kann also eine mehrkanalige Messung durchgeführt werden.

Das Füllstandmessgerät 501 ist ausgeführt, mit Hilfe einer ersten Messeinrichtung 509 oder mit Hilfe einer ersten Hochfrequenzeinheit 509 einen elektromagnetischen Impuls 511 zu generieren und diesen mit Hilfe einer geeigneten Einkopplung 510 oder einer ersten Einkoppeleinrichtung 510 in der ersten Wellenführeinrichtung 531 einzukoppeln, beispielsweise einer Außenseite 531 des Standrohres 505. Zum Einkoppeln leitet die erste Einkoppeleinrichtung 510 den elektromagnetischen Puls 511 oder die elektromagnetische Welle 511 auf die Außenseite des Standrohres 505. Der elektromagnetische Impuls 511 bewegt sich nach dem Einkoppeln entlang der Oberfläche 531 des Standrohres 505 fort und wird an der Oberfläche 506 des zu vermessenden Mediums reflektiert. Die erste Hochfrequenzeinheit 509 bereitet aus den reflektierten Signalen eine Echokurve auf, welche in der Analog-Digital-Wandlereinheit 507 digitalisiert wird und an die Auswerteeinrichtung 508 oder Auswerteeinheit 508 weitergeleitet wird. Die Analog-Digital-Wandlereinheit 507 teilen sich die erste Messeinrichtung 509 und die zweite Messeinrichtung 502, d.h. die erste Messeinrichtung 509 und die zweite Messeinrichtung 502 nutzen eine gemeinsame A/D-Wandlereinheit 507. Die Auswerteeinheit 508 bestimmt anhand dieser digitalisierten ersten Echokurve zumindest einen Kennwert für das Niveau der Füllgutoberfläche 506.

Das Füllstandmessgerät 501 strahlt ferner die in der zweiten Messeinrichtung 502, in dem zweiten Kanal 502 oder in einer zweiten Hochfrequenzeinheit 502 erzeugte Radarwelle 503 über eine zweite Einkoppeleinrichtung 504 oder Antenne 504 in das Innere eines Standrohres 505 ab. Das Standrohr 505, insbesondere die innere Rohrwand des Standrohres 505, dient als örtlich getrennte Vermesseinrichtung 532 und kann als eine zweite Wellenführeinrichtung 532 für die Radarwelle 503 oder für die elektromagnetische Welle 503 ausgeführt sein. Aufgrund der Reflektion an der Füllgutoberfläche 506 ist das Füllstandmessgerät 501 in der Lage, eine zweite Echokurve zu bilden, und diese mit Hilfe der Analog-Digital-Wandlereinheit 507 zu digitalisieren und als eine digitale Echokurve 204 an die Auswerteeinrichtung 508 oder Auswerteeinheit 508 weiterzureichen. Die Auswerteeinheit 508 bestimmt anhand dieser digitalisierten Echokurve zumindest einen weiteren Kennwert für das Niveau der Füllgutoberfläche 506.

Es sei ergänzend darauf hingewiesen, dass diese Bestimmung eines Füllstandes mit der Vermesseinrichtung, beispielsweise im Inneren 532 eines Standrohres 505, mit verschiedenen Messprinzipien realisiert werden kann. Beispiele für Messprinzipien auf denen die Vermesseinrichtung basieren kann sind Füllstandmessungen auf Basis von Ultraschall oder Laser oder aber auch Füllstandmessungen mit Hilfe konduktiver, induktiver oder kapazitiver Vermessung des Innenraumes des Standrohres.

Die erste Wellenführeinrichtung 531 trennt örtlich die Vermesseinrichtung 532 ab, so dass die erste Messeinrichtung 509 die Füllgutoberfläche 506 an einer anderen örtlichen Position als die Vermesseinrichtung 532 erfasst. Die erste Wellenführeinrichtung 531 trennt somit zwei Raumbereiche 531, 532 voneinander ab. Insbesondere kann eine Sonde 505 zwei Raumbereiche 531, 532 bereitstellen, in denen Messungen durchgeführt werden können.

Weiterhin ist die Auswerteeinheit 508 in der Lage, unter Verwendung zumindest eines der zuvor aus einer ersten Messung und/oder einer zweiten Messung ermittelten Kennwerte für das Niveau innerhalb und/oder außerhalb des Standrohres 505 zumindest einen gemeinsamen Kennwert für das Niveau der Füllgutoberfläche 506 zu ermitteln, welcher nach weiterer Verrechnung durch die Ausgabeeinrichtung 512 an einer gemeinsamen Schnittstellen 513 bereitgestellt wird. Die Bereitstellung kann in analoger Form beispielsweise als 4..20 mA Signal an einer 4..20 mA Schnittstelle oder auch in digitaler Form beispielsweise auf einem Feldbus realisiert werden. Ein Feldbus kann ein HART®-Bus, ein Profibus oder ein Fieldbus Foundation ™ Feldbus sein.

Es sei auch möglich, dass die Auswerteeinheit 508 erweiterte Informationen auf Basis der zumindest zwei Messungen ermittelt, also Informationen, die im Wesentlichen keine Füllstände sind. In anderen Worten kann mittels der zweikanaligen Messung oder der mehrkanaligen Messung nicht nur ein Füllstand, sondern auch ein weiteres Ergebnis ermittelt werden. Dabei kann es sich beispielsweise um ASSET-Informationen handeln, welche eine frühzeitige Identifikation sich anbahnender Funktionsstörungen des Sensors bereitstellen, oder aber auch um Angaben bezüglich der Zuverlässigkeit der Messung oder der Verschmutzung des Standrohres.

Das in Fig. 5 dargestellte Standrohr 505 weist eine Vielzahl von seitlichen Öffnungen 533 in der Mantelfläche des Standrohres 533 auf, welche es einer Flüssigkeit ermöglichen, in das Innere 532 des Standrohres zu gelangen. In einem Ausführungsbeispiel weist das Standrohr eine einzige seitliche Öffnung oder genau zwei seitliche Öffnungen auf. In einem Beispiel ist zumindest eine seitliche Öffnung so an dem Standrohr 505 angeordnet, dass sie in einem eingebauten Zustand in einem Behälter 100 möglichst nahe dem Behälterboden 534 und / oder dass sie möglichst weit vom Behälterboden 534 entfernt angeordnet ist. Der Behälterboden 534 mag als der Bereich in einem Behälter 100 bezeichnet werden, an dem sich eine Flüssigkeit im Wesentlichen ansammelt, wenn auf die Flüssigkeit 506 eine Schwerkraft wirkt. Die Öffnungen 533 können als Bohrungen, Lamellen oder Schlitze ausgeführt sein. Die Öffnungen können in einem im Wesentlichen gleichmäßigen Raster, entlang einer Linie oder aber auch unregelmäßig über die Länge des Rohres 505 verteilt sein. Gemäß einem anderen Beispiel weist das Rohr 505 bis auf die Öffnungen an den beiden Stirnseiten des Rohres 505 im Wesentlichen keine weiteren Öffnungen auf. Ein Rohr mag im Allgemeinen Öffnungen an den Stirnseiten aufweisen. Ein Deckel auf einer Rohrstirnseite kann als Abstandshalteeinrichtung genutzt werden. Die Abstandshalteeinrichtung kann an jeder beliebigen Position über die Länge des Rohres angeordnet sein.

Die Messvorrichtung 505 ist als mehrkanaligen Messsonde 505 ausgebildet. Sie weist die Abstandshalteeinrichtung 535 auf. die im Wesentlichen dafür sorgt, dass die Vermesseinrichtung 532 und die erste Wellenführeinrichtung 531 einen im Wesentlichen konstanten Abstand über eine vorgebbare Länge aufweisen. Die Abstandshalteeinrichtung 535 mag damit so eingerichtet sein, dass sie eine im Wesentlichen parallele Messung in den beiden Kanäle 511, 532 ermöglichen kann. Im Fall, dass neben der ersten Wellenführeinrichtung 532 auch die Vermesseinrichtung 531 die Ausbreitung einer elektromagnetischen Welle nutzt, mag die Abstandshalteeinrichtung im Wesentlichen dafür sorgen, dass sich die beiden Wellen unabhängig voneinander in einer parallelen Richtung ausbreiten. Somit mag die Messung des Füllstandes 506 an zwei unterschiedlichen Orten erfolgen, deren Abstand zueinander im Wesentlichen bekannt ist. Die Abstandshalteeinrichtung 535 kann an eine Anschlussabstandshalteeinrichtung 535' der Steuervorrichtung 530 angepasst sein.

Zum Anbringen der Messsonde 505 an der Steuervorrichtung 530 kann an der Steuervorrichtung 530 eine erste Anschlusseinrichtung 536' und eine zweite Anschlusseinrichtung 537' vorgesehen sein. An der Messonde ist eine erste Einkoppeleinrichtung 510 mit einer Anschlusseinrichtung 536 und eine zweite Einkoppeleinrichtung 504 mit einer Anschlusseinrichtung 537 vorgesehen. Die erste Anschlusseinrichtung 536' mag zum elektrischen Verbinden mit der Anschlusseinrichtung 536 der ersten Einkoppeleinrichtung 510 vorgesehen sein, beispielsweise als eine Stecker/Buchsen-Kombination. Die zweite Anschlusseinrichtung 537' mag zum elektrischen Verbinden mit der Anschlusseinrichtung 537 der zweiten Einkoppeleinrichtung 504 vorgesehen sein, beispielsweise als eine Stecker/Buchsen-Kombination. Zum mechanischen Verbinden der Messvorrichtung 505 mit der Steuervorrichtung 530 kann ein zusammenpassendes Schraubgewinde und/oder ein entsprechender Bajonettverschluss vorgesehen sein. Die mechanische Kopplung kann auch mittels der Abstandshalteeinrichtung 535 oder der Anschlussabstandshalteeinrichtung 535' erfolgen. Die Anschlussabstandshalteeinrichtung 535' kann dazu dienen, das Messsignal oder die elektromagnetische Welle der Steuervorrichtung 530 in einem dem Abstand der Vermesseinrichtung und der ersten Wellenführeinrichtung entsprechenden Abstand zu halten. Damit kann sich leicht bei der mechanischen Kopplung die elektrische Kopplung herstellen lassen, da mittels der Abstandshalteeinrichtung 535 und der Anschlussabstandshalteeinrichtung 535' die Anschlusseinrichtungen 536, 537 der Einkoppeleinrichtungen 510, 504 und der Messeinrichtungen 509, 502 aufeinander angepasst sind. So kann schnell ein Messgerät 501 zur mehrkanaligen Messung hergestellt werden.

Die Fig. 6 zeigt eine weitere Anordnung 601 zur mehrkanaligen Füllstandsmessung. In dem exemplarischen Ausführungsbeispiel der vorliegenden Erfindung gemäß Fig. 6 wird ein Koaxialleiter 605 als mehrkanalige Sonde genutzt. In dieser Variante wird ein Standrohr 605, 505 mit einem Innenleiter 603 versehen und bildet einen Koaxialleiter 605, welcher durch das Anbringen an der Steuervorrichtung 630 Teil des Füllstandmessgerätes 601 ist. Das Niveau 506 der Flüssigkeit im Inneren dieses Leiters 605 wird mit Hilfe eines zweiten elektromagnetischen Impulses 639 bestimmt, welcher von der zweiten Messeinrichtung 602 erzeugt wird, die als eine dritte Hochfrequenzeinheit 602 ausgebildet ist. Diese dritte Hochfrequenzeinheit 602 ist so eingerichtet, dass sie eine elektromagnetische Welle in dem Koaxialleiter 605 anregen kann. Die erste Messeinrichtung 509 ist als erste Hochfrequenzeinheit 509 ausgebildet und entspricht der ersten Hochfrequenzeinheit 509 aus Fig. 5. Die erste Messeinrichtung 509 wird dazu benutzt, das Niveau 506 der Flüssigkeit entsprechend dem in der Fig. 5 dargestellten Verfahren des Vermessens des Füllstandes in dem ersten Kanal 531 entlang der äußeren Oberfläche des Standrohres. 605 zu messen. Auch diese in der Fig. 6 dargestellte Ausführungsfonn einer zweikanaligen Vermessung 531, 632 mittels einer zweikanaligen Messonde 605 wird verwendet, um zwei voneinander unabhängige Messungen nach dem Prinzip der geführten Mikrowelle zur Füllstandbestimmung durchzuführen oder eine doppelte Füllstandmessung nach einem Laufzeitverfahren durchzuführen.

In dem Fall einer geführten Mikrowelle breitet sich die geführte Welle im Wesentlichen zwischen einem Potential und einem Bezugspotential aus. Bei einem Stab als Wellenleiter mag der Stab das Potential tragen und das Bezugspotential im Wesentlichen in einem unendlich weit entfernten Punkt liegen. Bei der Ausbreitung einer elektromagnetischen Welle entlang einer Oberfläche, wie der Oberfläche 531 eines Rohres, mag das Potential auf der Rohraußenseite 531 oder Mantelfläche des Rohres liegen und das Bezugspotential mag auf der Innenseite einer Behälterwand 538 liegen. Somit kann ein Medium gemessen werden, welches sich zwischen der Behälterwand 538 und der Mantelfläche 531 des Rohres 505, 506 befindet. Bei einem Koaxialleiter 605 mag das Potential auf dem Innenleiter 603 und das Bezugspotential auf einem Außenleiter liegen, beispielsweise der Mantelfläche eines Rohres 605, insbesondere der inneren Oberfläche einer Rohrwand.

Die Einkoppeleinrichtungen 510, 504, 631 mögen eingerichtet sein, ein Signal 511, 503, 603, welches sie über die Anschlusseinrichtungen 536, 537, 636, 637 der Einkoppeleinrichtungen bzw. über die Anschlusseinrichtungen 536', 537', 636', 637' der Messeinrichtungen 509, 502, 602 empfangen, in die entsprechenden Kanäle 531, 532, 632 einzukoppeln. Insbesondere mag die Einkoppeleinrichtung 510, 504, 631 dafür Sorge tragen, dass sich die Wellen 511, 639 in den gewünschten Bereichen, Raumbereichen 531, 532, 632 oder Kanälen ausbreiten können. So mag sich eine erste elektromagnetische Welle 511 in einem ersten Kanal 531 und eine zweite elektromagnetische Welle 639 in einem zweiten Kanal 632 ausbreiten. Für die Ausbreitung mag die Einkoppeleinrichtung 510, 504, 631 für die Zuordnung des Potentials und des Bezugspotentials sorgen. Für diese Zuordnung kann die Einkoppeleinrichtung eine Potentialtrennung aufweisen.

Die Einkoppeleinrichtungen 510, 631 weisen die Anschlusseinrichtungen 636, 637 auf. die für die elektrische Ankopplung der Sonde 605 an die Steuervorrichtung 630 an entsprechende Anschlusseinrichtungen 636', 637' sorgen. Die Abstandshalteeinrichtung 635 bzw. die Anschlussabstandshalteeinrichtung 635' können neben der örtlichen Trennung der Einkoppeleinrichtungen 510, 631 bzw. der Anschlusseinrichtungen 636, 637 auch für die Zuordnung der Potentiale sorgen.

Die beiden Kanäle 531, 632 bilden sich im Inneren und im Äußeren des Koaxialleiters 605 aus, also im Wesentlichen zwischen dem Standrohr 605 und der Behälterwand 538 bzw. zwischen Innenleiter 631 und Außenleiter 605.

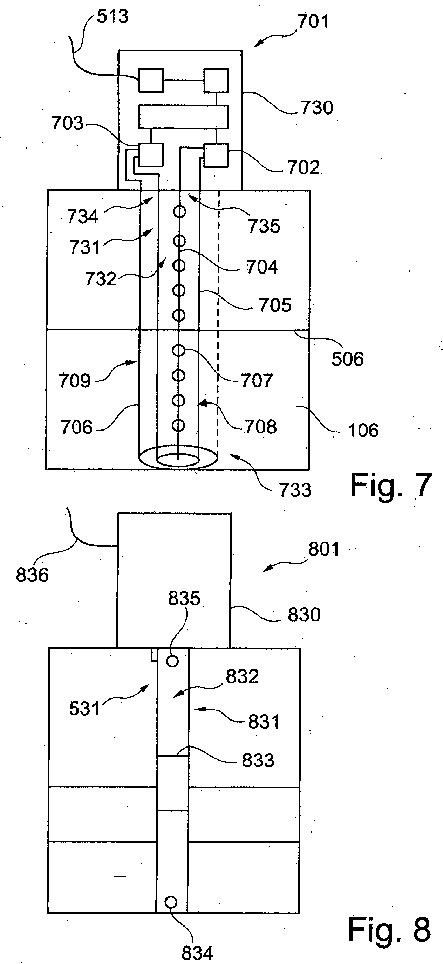

Die Fig. 7 zeigt eine weitere Sonde 733 gemäß einem exemplarischen Ausführungsbeispiel der vorliegenden Erfindung. Das Füllstandmessgerät 701 besitzt wiederum zwei voneinander unabhängige Messeinrichtungen 702, 703 oder Hochfrequenzeinheiten 702, 703, welche genutzt werden, um nach dem Prinzip der geführten Mikrowelle den Füllstand auf zwei verschiedenen Wegen 731, 732 oder in zwei unterschiedlichen Kanälen 731, 732 oder örtlich getrennt zu messen. Die örtliche Trennung erfolgt entlang einer radialen Richtung der koaxial angeordneten Hohlleiter, d.h. im Wesentlichen senkrecht zu einer Ausbreitungsrichtung der geführten Welle. Die zwei Kanäle werden durch einen Doppelkoaxialleiter gebildet, bei dem ein Koaxialleiter 708, aufweisend das Standrohr 705 als Außenleiter 705 und den Stab 704 als Innenleiter 704, von einem Hohlleiter 706 umgeben wird, so dass der Koaxialleiter und der Hohlleiter bezogen auf eine Längsachse zueinander im Wesentlichen koaxial angeordnet sind. Die Sonde 733 weist also im Wesentlichen zwei koaxial angeordnete Rohre 705,706 auf.

Die erste Messung 731 verwendet den äußeren Koaxialleiter 709 zur Bestimmung eines Füllstandwertes oder des Füllstandniveaus, wobei der äußere Koaxialleiter 709 das Ummantelungsrohr 706 oder Standrohr 706 als Außenleiter und das Rohr 705 als Innenleiter aufweist. Die zweite Messung 732 verwendet den inneren Koaxialleiter 708 zur Bestimmung des Füllstandwerts. Das Rohr 706 des äußeren Koaxialleiters 709 bildet das gemeinsame Gehäuse der Sonde 733. Somit teilen sich der erste Kanal 731 und der zweite Kanal 732 den mittleren Leiter 705 als Außenleiter 705 bzw. Innenleiter 705. Ob der mittlere Leiter 705 als Innenleiter 705 für das äußere Rohr 706 oder als Außenleiter 705 für den Innenleiter 704 genutzt wird, hängt von der Beschaltung der Einkoppeleinrichtung 734 des Außenleiters und von der Beschaltung der Einkoppeleinrichtung 735 des Innenleiters ab. Der mittlere Leiter 705 kann mehrschichtig aufgebaut sein. Beispielsweise kann der mittlere Leiter einen leitfähigen Außenleiter und einen leitfähigen Innenleiter aufweisen, die durch ein Dielektrikum im Wesentlichen voneinander isoliert sind, um sowohl eine örtliche Trennung als auch eine elektrische Trennung zu erreichen. Der Außenleiter oder die Außenseite des mittleren Leiters 705 kann der Innenleiter des ersten Kanals 731 sein und der Innenleiter oder die Innenseite des mittleren Leiters 705 kann auch der Außenleiter des zweiten Kanals 732 sein. Der innere Koaxialleiter 708 und der äußere Koaxialleiter 709 können in Abhängigkeit von der Anwendung der Sonde regelmäßige Bohrungen 707 oder Öffnungen 707 aufweisen, welche ein Eindringen der zu messenden Flüssigkeit 106 erlauben. Zur Darstellung des sonst von dem äußeren Koaxialleiters 709 verborgenen inneren Koaxialleiters 708 ist ein Teil der Rohrwandung des Ummantelungsrohres 706 in Fig. 7 gestrichelt dargestellt. Außerdem sind in Fig. 7 die offenen unteren Stirnseiten der Rohre 705 und 708 an gegenüber den Einkoppeleinrichtungen 734, 735 zu erkennen. Die zwei Bereiche, die die Sonde 733 abtrennt, entsprechen den beiden Kanälen 731, 732, jeweils zwischen dem Innenleiter 704, 705 bzw. Außenleiter 706, 705.

Die Fig. 8 zeigt ein Messgerät 801 zur Vermessung von Trennschichten und/oder Emulsionen mit einem Standrohr. Das Messgerät 801 weist die Steuervorrichtung 830 und die Sonde 831 auf. Die Sonde 831 ist eingerichtet, dass sich in einem zweiten Kanal 832 ein unterschiedlicher Flüssigkeitsstand als in einem ersten Kanal 531 einstellt. Die konstruktive Ausgestaltung der Sonde 831 mit im Wesentlichen lediglich zwei seitlichen Öffnungen 834, 835 mag verhindern, dass sich beispielsweise eine im Sondeninneren 832 gebildete Trennschicht einer Flüssigkeit 833 durch ein Rührwerk vermischt. Eine derart ausgebildete Sonde 831 mag die Verwendung der Sonde 831 zur Emulsionsmessung in einem Standrohr ermöglichen. Dazu können aus den zumindest zwei Messungen in den zwei Kanälen 531, 832 Kennwerte ermittelt werden, welche im Rahmen der Trennschichtmessung und/oder der Emulsionsmessung benötigt werden. In anderen Worten mag eine Sonde für die Emulsionsmessung so eingerichtet sein, dass sie innerhalb eines Behälters zwei Bereiche 531, 831 oder Kanäle 531, 831 abtrennen kann, wobei in dem einen Bereich eine vermischte Emulsion mehrerer Flüssigkeiten gemessen werden kann und in dem anderen Bereich eine durch Entmischung entstandene Trennschicht zwischen den Flüssigkeiten gemessen werden kann. Eine zugehörige Steuervorrichtung 830 kann über die Sammelschnittstelle 836 einen Kennwert für die Emulsion ausgeben.

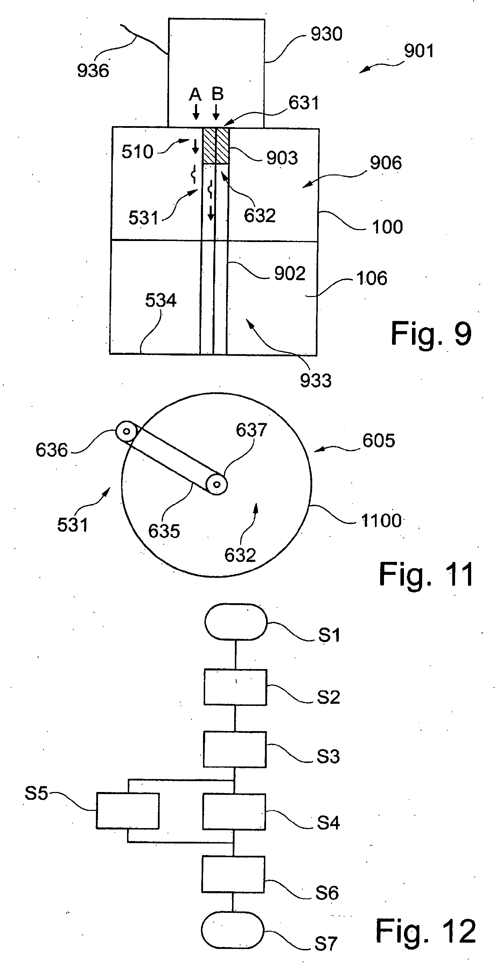

Die Fig. 9 zeigt ein Messgerät 901 zur Vermessung oder Bestimmung der Medieneigenschaften einer Überlagerungsatmosphäre. Das Messgerät weist die Sonde 933 und die Steuervorrichtung 930 auf. Die Sonde 933 oder Messvorrichtung 933 ist ein Wellenleiter 902 welcher im Inneren eine zumindest teilweise Befüllung mit einem Dielektrikum 903 aufweist. Das Dielektrikum 903 ist in einem oberen Bereich des Hohlleiters 902, Wellenleiters 902, Koaxialleiters 902 oder des Standrohres 902 angeordnet. Dabei befindet sich der obere Bereich im Wesentlichen gegenüber eines Behälterbodens 534 nahe der zweiten Einkoppeleinrichtung 631 eines zweiten Kanals 632, B. Mittels eines ersten Kanals 531, A kann die Außenseite des Wellenleiters 902 vermessen werden. Aufgrund der unterschiedlichen Messungen in den zwei Kanälen A, B kann sich eine Medieneigenschaft der Überlagerungsatmosphäre 906 oder der Überlagerungsflüssigkeit 906 bestimmen lassen. Das Dielektrikum 903 verzögert die Ausbreitung der zur Messung verwendeten Welle im Inneren der Sonde 933. Auf diese Weise ist es möglich, dass die beiden Signale in den beiden Kanälen 631, 632 unterschiedliche Laufzeiten aufweisen, obwohl die physikalische Distanz, die sie zum Füllgut 106 zurücklegen; im Wesentlichen dieselbe ist. Durch die sich dabei in den beiden Kanälen A, B ergebenden unterschiedlichen Echokurven können insbesondere die Dielektrizitätszahl und/oder die Permeabilitätszahl einer sich über dem Füllgut 106 oder über der Flüssigkeit 106 ausbildenden Überlagerungsatmosphäre 906 oder Überlagerungsflüssigkeit 906 bestimmt werden. Eine zugehörige Steuervorrichtung 930 kann über die Sammelschnittstelle 936 einen Kennwert für die Überlagerungsatmosphäre 906 oder Überlagerungsflüssigkeit 906 ausgeben.

Da ein Kennwert über die gemeinsame Sammelschnittstelle 513, 836, 936 ausgegeben werden kann, belegt ein Messgerät 501, 601, 701, 801, 901 lediglich einen einzigen Anschluss an einem Auswertegerät.

Das Zusammenfassen mindestens zweier Kanäle oder mehrerer Kanäle in einer einzigen Sonde 733, 505, 605, 831, 902, insbesondere das Zusammenfassen mehrerer Kanäle in einem gemeinsamen Gehäuse, beispielsweise durch die Abstandshalteeinrichtung 535, 535', 635, 635', kann es ermöglichen, dass die Sonde lediglich eine einzige Prozessöffnung eines Behälters 100 belegt. Somit ist eine platzsparende und kompakte Anordnung von zwei Messkanälen möglich.

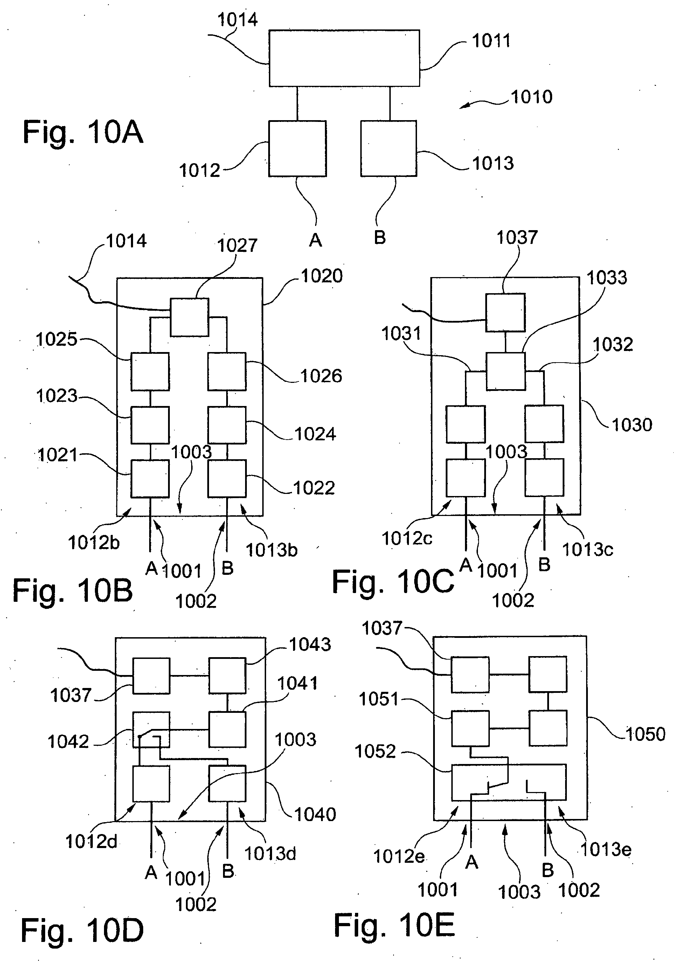

Fig. 10A zeigt ein einfaches Blockschaltbild einer Steuervorrichtung 1010 oder einer Vorrichtung 1010 zur Füllstandmessung. Zur Anpassung an die Vielzahl von Kanälen A, B, 531, 532, 632, 731, 732 oder die zumindest zwei Kanäle, welche die Messvorrichtung 505, 605, 933, 733 bereitstellt, kann eine entsprechende Ausgestaltung der Geräteelektronik erfolgen, welche das Betreiben von zumindest zwei Kanälen einer Sonde ermöglicht. Die Anschlusseinrichtungen an den Einkoppeleinrichtungen 504, 510, 734, 735 der Sonde oder die Sondenanschlüsse mögen allgemein mit den Buchstaben A und B angegeben sein, um zu verdeutlichen, dass es sich um zwei Kanäle handelt, ohne jedoch auf den Typ des Anschlusses oder der Einkoppeleinrichtung einzugehen. Die Kanäle A, B mögen durch die Anschlussabstandshalteeinrichtung in einem Abstand gehalten werden, der einem Abstand der zugehörigen Anschlüsse der Einkoppeleinrichtungen entsprechen mag.

Die Fig. 10A zeigt, dass es möglich ist, zwei komplette Elektronikeinsätze 1012, 1013 zweier einzelner zugehöriger Steuervorrichtungen von zwei beliebigen Füllstandmessgeräten mittels der Auswerteeinrichtung 1011 zu kombinieren, um zu einem gemeinsamen Kennwert an der Sammelschnittstelle 1014 zu gelangen. Dabei dient die Auswerteeinrichtung der Auswertung zweier Messergebnisse von zwei unterschiedlichen Messgeräten 101, 301, 401, die nach dem Einkanalprinzip arbeiten. Die einzelnen Messgeräte, insbesondere die zugehörigen Steuervorrichtungen, die nach dem Einkanalprinzip arbeiten, können auch zum Betreiben der einzelnen Kanäle einer Mehrkanalsonde genutzt werden. Das Messgerät bzw. eine zugehörige Sonde, die nach dem Einkanalprinzip arbeitet, erlaubt im Wesentlichen nur die Durchführung einer einzigen Messung, da beispielsweise keine weitere Einkoppeleinrichtung für eine zusätzliche Messung vorgesehen sein mag. Die Elektronikeinsätze mögen also nach verschiedenen Prinzipien arbeiten, passend zur Ausgestaltung der verwendeten Sondeneinkopplungen an den Anschlüssen A und B. Die übergeordnete Auswerteeinheit 1011 verrechnet die von den Elektronikeinsätzen 1012, 1013 bereitgestellten, einzelnen Kennwerte, welche beispielsweise aus parallel oder hintereinander durchgeführten Messungen A und B ermittelt werden können, und bildet daraus zumindest einen gemeinsamen Messwert, der an der gemeinsamen externen Schnittstelle 1014 bereitgestellt wird. Dieser gemeinsame Messwert mag ein Kennwert sein, der im Wesentlichen nur durch das Durchführen von zumindest zwei Messungen ermittelt werden kann, insbesondere ein Kennwert, der im Wesentlichen nur durch das Durchführen von zumindest zwei Messungen an unterschiedlichen Orten ermittelt werden kann. In anderen Worten mag der Kennwert im Wesentlichen lediglich durch die Durchführung zweier einzelner Messungen zur Füllsfandsmessung und/oder Grenzstandsmessung vermittelt werden können.

Die Fig. 10B zeigt ein Blockschaltbild einer Steuervorrichtung 1020 bei der die Messwertverarbeitung der beiden Kanäle, insbesondere die erste Messeinrichtung 1012b und die zweite Messeinrichtung 1013b, und die Auswerteeinrichtung 1027, in einem gemeinsamen Gehäuse integriert ist. Die Messeinrichtungen 1012b, 1013b können einzelne Füllstandsmessgeräte sein, insbesondere deren Steuervorrichtung oder Auswerteelektronik. Die Funktionalität einer Steuervorrichtung 1020 nach Fig. 10B entspricht im Wesentlichen der Funktionalität der Steuervorrichtung 1010 nach Fig. 10A, wobei der Aufbau oder die Elektronik der Messeinrichtung 1012, 1013 detaillierter dargestellt ist. Die erste Messeinrichtung 1012b weist die Hochfrequenzerzeugungseinheit 1021, die Analog-Digital-Wandlereinheit 1023 und die Auswerteeinheit 1025 auf, die derart zum Zusammenwirken eingerichtet sind, dass sie in Kombination, eine erste Messung in dem ersten Messkanal A durchführen können und einen ersten Messwert, z.B. Füllstandsmesswert, bilden können. Ferner weist die zweite Messeinrichtung 1013b die Hochfrequenzerzeugungseinheit 1022. die Analog-Digital-Wandlereinheit 1024 und die Auswerteeinheit 1026 auf, die derart zum Zusammenwirken eingerichtet sind, dass sie in Kombination, eine zweite Messung in dem zweiten Messkanal B durchführen können und einen zweiten Messwert, z.B. Füllstandsmesswert, bilden können. Zur Durchführung der Messungen kann die Steuervorrichtung an der ersten Anschlusseinrichtung 1001 eine elektromagnetische Welle und an der zweiten Anschlusseinrichtung 1002 ein Messsignal, beispielsweise eine zweite elektromagnetische Welle, bereitstellen. Die Steuervorrichtung 1020 mag mindestens drei externe Schnittstellen aufweisen. In einem Beispiel kann die Steuervorrichtung 1020 lediglich 3 externe Schnittstellen aufweisen. Zwei der externen Schnittstellen 1001, 1002 mögen der Bereitstellung eines Messsignals dienen und/oder dem Empfang eines Echosignals und die dritte mag als Sammetschnittstelle 1014 zum Bereitstellen eines gemeinsamen Messwerts dienen. Die Messwerte in den beiden Kanälen A, B werden durch eine geeignete Programmlogik in der Ausgabeeinheit 1027 miteinander verrechnet und nach außen hin über die Sammelschnittstelle 1014 bereitgestellt. Die Ausgabeeinheit 1027, die erste Auswerteeinheit 1025 und die zweite Auswerteeinheit 1026 mögen eine gemeinsame Auswerteeinheit oder gemeinsame Auswerteeinrichtung bilden. Die Messung mit der zweiten Messeinrichtung B kann auch nach einem alternativen Messprinzip realisiert werden, welches sich von einer geführten oder frei ausbreitenden elektromagnetischen Welle unterscheidet. Die Hochfrequenzeinheit 1022 weist dann eine passende Einheit zum Erzeugen des Messsignals auf, beispielsweise eine Lasererzeugungseinheit, eine optische Signalquelle, eine Ultraschallerzeugungseinheit, eine akustische Signalquelle, eine Signalquelle zur Durchführung einer kapazitiven Messung und/oder eine Signalquelle zur Durchführung einer induktiven Messung. Das Messsignal wird gleichfalls über eine dem Messsignal entsprechende Anschlusseinrichtung 1002 bereitgestellt.

Die Fig. 10C zeigt eine weitere Realisierungsvariante einer Steuervorrichtung 1030. In der Steuervorrichtung 1030 sind die erste Messeinrichtung 1012c und die zweite Messeinrichtung 1013c mit der Ausgabeeinheit 1037 in einem gemeinsamen Gehäuse untergebracht. Die Steuervorrichtung 1030 nutzt für die Auswertung der digitalisierten Echokurven oder Messwerte der Kanäle A und B, welche an den Anschlüssen 1031 und 1032 bereitgestellt werden, eine gemeinsame Auswerteeinheit 1033. Folglich weist die Auswerteeinheit 1033 genau drei Anschlüsse auf. Mit einem Anschluss ist die Auswerteeinheit 1033 an der Ausgabeeinheit 1037 angeschlossen, mit dem zweiten Anschluss ist die Auswerteeinheit 1033 mit dem ersten Kanal A 1012c und mit dem dritten Anschluss ist die die Auswerteeinheit 1033 mit dem zweiten Kanal B 1013c verbunden. In anderen Worten teilen sich die erste Messeinrichtung 1012c und die zweite Messeinrichtung 1013c eine gemeinsame Auswerteeinheit 1033 oder Auswerteeinrichtung 1033.

Wie in dem Blockdiagramm der Fig. 10D dargestellt ist, kann auch vorgesehen sein, dass sich die erste Messeinrichtung 1012d und die zweite Messeinrichtung 1013d einen A/D Wandler teilen. Die Überführung der Signale der beiden Kanäle A, B in eine digitale Darstellung kann mit einer einzigen Analog-Digital-Wandlereinheit 1041 innerhalb der Steuervorrichtung 1040 durchgeführt werden. Zur Nutzung einer gemeinsamen Analog-Digital-Wandlereinheit 1041 weist die Steuervorrichtung 1040 einen Analogschalter 1042 auf, welcher die analogen und niederfrequenten Signale der Kanäle A, B in einem Zeitmultiplewerfahren an die Analog-Digital-Wandlereinheit 1041 weiterleitet. Die Messungen in den beiden Kanälen A, B erfolgt wegen der gemeinsamen Nutzung der A/D-Wandlereinheit 1041 zeitlich hintereinander. Daher ist die Auswerteinheit 1043 im Wesentlichen lediglich mit zwei Anschlüssen versehen. Über einen Anschluss erhält die Auswerteeinheit 1043 das Zeitmultiplexsignal von dem A/D-Wandler 1041. Über den anderen Anschluss gibt sie ein aufbereitetes Signal, welches sie aus den Messsignalen der Kanäle A, B gewonnen hat, an die Ausgabeeinheit 1037 weiter.

Das Blockschaltbild einer Steuervorrichtung 1050, eines Sensors oder Messgeräts gemäß Fig. 10E zeigt eine Schaltungsanordnung, bei der sich die beiden Messeinrichtungen 1012e, 1013e eine vorhandenen Hochfrequenzeinheit 1051 teilen. Um diese Teilung der Hochfrequenzeinheit 1051 zu nutzen ist ein Hochfrequenzumschalter 1052 vorgesehen. Mit dieser Schaltungsanordnung lassen sich viele Komponenten der Steuervorrichtung für beide Kanäle A, B oder für beide Messeinrichtungen 1012e, 1013e gemeinsam nutzen, wodurch ein einfacher Aufbau der Steuervorrichtung 1050 möglich wird. Durch das zielgerichtete Einsetzen gemeinsam genutzter Einrichtungen, können Herstellkosten eines Füllstandmessgeräts erniedrigt werden.

In den Figuren Fig. 10A bis Fig. 10E kann das gemeinsame Gehäuse der Steuervorrichtung die Anschlussabstandshalteeinrichtung 1003 aufweisen, die die Anschlusseinrichtungen 1001, 1002 und insbesondere die Kanäle A, B in einem bestimmten Abstand zueinander hält. Dieser Abstand kann zu einer Sonde passen, die mit der jeweiligen Steuervorrichtung betrieben werden soll. Durch das Vorsehen unterschiedlicher Abstände kann eine Gehäusekodierung erfolgen, mit der vorgesehen werden kann, dass mit einer Steuervorrichtung nur die passenden Sonden genutzt werden. Die Schaltungsanordnungen der Figuren Fig. 10A bis 10E können als integrierter Schaltkreis realisiert werden.

Als Anschlusseinrichtung 1001, 1002 der Steuervorrichtung oder als Anschlusseinrichtung der Einkoppeleinrichtung kann ein 50 Ohm Koaxialkabel vorgesehen sein.

Die Fig. 11 zeigt eine Draufsicht auf eine Messvorrichtung 605 der Fig. 6, die nach dem Zweikanalprinzip arbeitet. Die Messvorrichtung weist das Standrohr 605 auf, an welchem mittels der Abstandshalteeinrichtung 635 und/oder der Trennwand 1100 zwei Messkanäle 531, 632 gebildet werden. Die Messkanäle 531, 632 befinden sich innerhalb und außerhalb des Standrohres 605. In diese Messkanäle 531, 632 kann über die Anschlusseinrichtungen 636, 637 der in Fig. 12 nicht gezeigten Einkoppeleinrichtungen ein Messsignal eingeprägt werden, beispielsweise eine elektromagnetische Welle. Eine Messignalausbreitung in den Kanälen 531, 632 erfolgt unabhängig voneinander, so dass unabhängig voneinander ein Füllstand an bestimmten Positionen gemessen werden kann. Aus den lokal unterschiedlichen Messergebnissen können neben dem Füllstand weitere Kenngrößen hergeleitet werden. Die Position der Messungen wird im Wesentlichen durch die Anordnung der Abstandshalteeinrichtung 635 bestimmt. Die Anschlusseinrichtungen 636, 637 der Fig. 12 sind als Koaxial-Buchsen ausgebildet.

Die Fig. 12 zeigt ein Flussdiagramm für ein Verfahren zum Betreiben einer Messvorrichtung, die nach dem Zweikanalprinzip arbeitet, gemäß einem exemplarischen Ausführungsbeispiel der vorliegende Erfindung. Ausgehend von einem Idle-Zustand S1 erfolgt in Schritt S2 das Bereitstellen einer ersten elektromagnetischen Welle in einer ersten Wellenführeinrichtung 1100 über eine erste Anschlusseinrichtung 636.

Der Schritt S3 sieht das Vermessen von zumindest einem Teil der ersten Wellenführeinrichtung 1100 mit einer Vermesseinrichtung 632 oder einer zweiten Wellenführeinrichtung 632 vor, welche eine zweite Anschlusseinrichtung 637' aufweist, wobei die erste Anschlusseinrichtung 636' von der zweiten Anschlusseinrichtung 637' mit der Anschlussabstandshalteeinrichtung 635' beabstandet wird. Die Anschlussabstandshalteeinrichtung 635' kann wie die Abstandshalteeinrichtung 635 der Sonde ausgestaltet sein. Die Abstandshalteeinrichtung kann auch von einem gemeinsamen Gehäuse, in dem die Steuervorrichtung untergebracht ist, ausgebildet werden.

In einem weiteren Schritt S4 wird ein erster Messwert einer Messung mit der ersten elektromagnetischen Welle an eine Auswerteeinrichtung bereitgestellt. Dieser Messwert wird aus dem Auswerten der Echokurve der ersten elektromagnetischen Welle gewonnen.

Im Wesentlichen gleichzeitig mit Schritt S4 oder parallel zu Schritt S4 erfolgt im Schritt S5 das Bereitstellen eines zweiten Messwerts einer Messung mit der Vermesseinrichtung 632 an die Auswerteeinrichtung. In einem weiteren exemplarischen Ausführungsbeispiel erfolgt das Bereitstellen des ersten Messwerts zeitlich vor dem Bereitstellen des zweiten Messwerts. In noch einem anderen Ausführungsbeispiel erfolgt das Bereitstellen des ersten Messwerts zeitlich nach dem Bereitstellen des zweiten Messwerts. In einer entsprechenden Reihenfolge kann das Bereitstellen der ersten elektromagnetischen Welle und des Messsignals der Vermesseinrichtung 632 im Schritt S2 bzw. S3 erfolgen.

In dem Schritt S6 werden die Messergebnisse zusammengefasst und/oder ausgewertet. Beispielsweise werden der erste Messwert und der zweite Messwert in einen gemeinsamen Messwert umgewandelt, und der gemeinsame Messwert wird an einer Sammelschnittstelle der Auswerteeinrichtung bereitgestellt. Über die Sammelschnittstelfe kann auch eine Kenngröße des Füllguts oder eines Behälterinhalts bereitgestellt werden, welche sich von einem Füllstand unterscheidet und beispielsweise eine Medieneigenschaft oder ein Mischungsverhältnis angibt.

In einem weiteren exemplarischen Ausführungsbeispiel der vorliegenden Erfindung gemäß einem ersten Aspekt wird eine Vorrichtung 501, 601, 701. 801, 901 zur Messung eines Füllstandes, einer Trennschicht oder einer Emulsion nach einem Laufzeitverfahren angegeben, wobei die Vorrichtung ein medienberührendes Standrohr 505, 605, 733 und eine erste Auswerteeinheit 1025 aufweist. Die erste Auswerteeinheit 1025 ist derart ausgeführt, dass sie zumindest einen Kennwert für einen ersten Füllstand, eine erste Trennschicht und/oder eine erste Emulsion innerhalb des medienberührenden Standrohr 505, 605, 733, 831, 933 ermitteln kann.

Die Vorrichtung 501, 601, 701, 801, 901 weist ferner eine weitere Auswerteeinheit auf, wobei die weitere Auswerteeinheit 1026 so ausgeführt ist, dass sie zumindest einen Kennwert für einen weiteren Füllstand, eine weitere Trennschicht und/oder eine weitere Emulsion ermittelt, welcher außerhalb des medienberührenden Standrohres 505, 605, 733, 831, 933 ermittelt wird. Für das Ermitteln des zumindest einen Kennwertes für einen weiteren Füllstand, eine weitere Trennschicht und/oder eine weitere Emulsion wird eine Mikrowelle entlang der äußeren Oberfläche des medienberührenden Standrohres geführt.

In einem zweiten Aspekt der vorliegenden Erfindung wird die Vorrichtung nach dem ersten Aspekt angegeben, wobei die erste Auswerteeinheit 1025 und die weitere Auswerteeinheit 1026 in Teilen oder gänzlich im Wesentlichen identisch 1033 sind.

In einem dritten Aspekt der vorliegenden Erfindung wird die Vorrichtung nach dem ersten Aspekt oder nach dem zweiten Aspekt angegeben, wobei der Abstand des ersten Füllstandniveaus und der Abstand des weiteren Füllstandniveaus von der Steuervorrichtung identisch sind. Der Abstand des ersten Füllstandniveaus und des weiteren Füllstandniveaus von der Steuervorrichtung mag entlang einer Ausbreitungsrichtung der elektromagnetischen Welle beim Aussenden gemessen werden.

In einem vierten Aspekt der vorliegenden Erfindung wird die Vorrichtung nach einem des ersten bis dritten Aspekts beschrieben, die weiter eine Einheit 1011, 1027, 1033 zur Bestimmung zumindest eines Kennwertes für den Füllstand und / oder für die Lage einer Trennschicht und/oder für die Zusammensetzung einer Emulsion aufweist, wobei hierzu der zumindest eine erste Wert und der zumindest eine weitere Wert verwendet werden.

In einem fünften Aspekt der vorliegenden Erfindung wird die Vorrichtung nach dem vierten Aspekt beschrieben, wobei die erste Auswerteeinheit, die weitere Auswerteeinheit und/oder die Einheit zur Bestimmung zumindest eines Kennwertes für den Füllstand in Teilen oder gänzlich identisch sind.

In einem sechsten Aspekt der vorliegenden Erfindung wird die Vorrichtung nach einem der Aspekte eins bis fünf angegeben, die weiter einen Innenleiter 603, 704 aufweist, welcher innerhalb des medienberührenden Standrohres 605, 708 geführt ist, wobei der Innenleiter und das medienberührende Standrohr einen Koaxialleiter bilden.

In einem siebten Aspekt der vorliegenden Erfindung wird die Vorrichtung nach dem sechsten Aspekt angegeben, wobei die erste Auswerteeinheit 1025 ausgeführt ist, den zumindest einen Kennwert für einen ersten Füllstand im medienberührenden Standrohr nach dem Prinzip der geführten Mikrowelle zu bestimmen.

In einem achten Aspekt der vorliegenden Erfindung wird die Vorrichtung nach einem der Aspekte eins bis sieben angegeben, die weiter zumindest ein das Standrohr umschließendes Ummantelungsrohr 706 aufweist, wobei dieses zumindest eine Ummantelungsrohr 706 den Außenleiter zumindest einer weiteren Koaxialleitung 708 bildet, wobei die weitere Auswerteeinheit ausgeführt ist, den zumindest einen Kennwert für einen Füllstand, die Trennschicht oder die Emulsion unter Verwendung der zumindest einen weiteren Koaxialleitung zu bestimmen.

Die erste Messeinrichtung 703 kann zwei Anschlüsse aufweisen, wobei einer mit dem Außenrohr 706 und der andere mit dem Innenrohr 705 verbunden ist. Die zweite Messeinrichtung 702 kann zwei Anschlüsse aufweisen, wobei einer mit dem Innenrohr 705 und der andere mit dem Stab 704 verbunden ist. Ein Anschluss mag eine Anschlusskabel sein.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Messvorrichtung (505, 605, 733, 831, 902) zur Bestimmung von Eigenschaften eines Mediums, aufweisend:

   eine erste Wellenführeinrichtung (531, 505, 605, 731) mit einer ersten Einkoppeleinrichtung (510, 734) zum Durchführen einer ersten Messung;
   eine Vermesseinrichtung (532, 632, 732) zum Durchführen einer zweiten Messung;
   wobei die erste Wellenführeinrichtung (531, 505, 605, 731) zum Unterteilen eines Behälterinnenraumes in zumindest einen ersten Raumbereich (531, 731) und einen zweiten Raumbereich (532, 732) eingerichtet ist; und
   wobei die erste Wellenführeinrichtung (531, 505, 605, 731) zum Führen einer ersten elektromagnetischen Welle (511) in dem ersten Raumbereich (531, 731) eingerichtet ist, welche über die erste Einkoppeleinrichtung (510, 734) in die erste Wellenführeinrichtung (531, 731) eingekoppelt worden ist;

   wobei die erste Wellenführeinrichtung die erste elektromagnetische Welle zum Medium hinführt;
   wobei die Vermesseinrichtung (532, 632, 732) zum Durchführen der zweiten Messung an der ersten Wellenführeinrichtung (531, 731) in dem zweiten Raumbereich (532, 732) eingerichtet ist;
   wobei die erste Wellenführeinrichtung (531, 505, 605, 731) zum Beabstanden der ersten Einkoppeleinrichtung (510, 734) der ersten Wellenführeinrichtung (531, 505, 605, 731) und der Vermesseinrichtung (532, 632, 732) eingerichtet ist, so dass sich die erste elektromagnetische Welle (511) in dem ersten Raumbereich in einem vorgebbaren Abstand von dem für die Durchführung der zweiten Messung mit der Vermesseinrichtung (532, 632, 732) vorgesehenen zweiten Raumbereich ausbreiten kann;
   wobei der erste Raumbereich von dem zweiten Raumbereich verschieden ist;
   wobei die Vermesseinrichtung (532, 632, 732) eine zweite Wellenführeinrichtung (532, 632, 732) mit einer zweiten Einkoppeleinrichtung (504, 631, 735) ist, wobei die zweite Wellenführeinrichtung (532, 632, 732) zum Führen einer zweiten elektromagnetischen Welle (503, 639) in dem zweiten Raumbereich eingerichtet ist, welche über die zweite Einkoppeleinrichtung (504, 631, 735) in die zweite Wellenführeinrichtung (532, 632, 732) eingekoppelt worden ist; wobei die zweite Wellenführeinrichtung die zweite elektromagnetische Welle zum Medium hinführt.

2. Messvorrichtung (505, 605, 733, 831, 902) nach Anspruch 1, weiter aufweisend:

   eine Abstandshalteeinrichtung (535, 635); wobei die Abstandshalteeinrichtung (535, 635) zum Beabstanden der ersten Einkoppeleinrichtung (510, 734) der ersten Wellenführeinrichtung (531, 505, 605, 731) und der Vermesseinrichtung (532, 632, 732) eingerichtet ist, so dass sich die erste elektromagnetische Welle (511) in dem ersten Raumbereich in einem vorgebbaren Abstand von dem für die Durchführung der zweiten Messung mit der Vermesseinrichtung (532, 632, 732) vorgesehenen zweiten Raumbereich ausbreiten kann.

3. Messvorrichtung (505, 605, 733, 831, 902) nach Anspruch 1 oder 2, wobei die erste Wellenführeinrichtung (531, 505, 605, 731) und/oder die zweite Wellenführeinrichtung (532, 632, 732) zumindest eine Wellenführeinrichtung ist, ausgewählt aus der Gruppe von Wellenführeinrichtungen bestehend aus:

   einem Koaxialleiter;
   einem Hohlleiter;
   einem mit zumindest einer Öffnung versehener Hohlleiter;
   einer Führeinrichtung für eine Mikrowelle;
   einem Standrohr;
   einem Draht;
   einem Metallstab; und
   einem Seil.

4. Messvorrichtung (505, 605, 733, 831, 902) nach Anspruch 2 oder 3, wobei die Abstandshalteeinrichtung (535, 635) zumindest eine Abstandshalteeinrichtung (535, 635) ist, ausgewählt aus der Gruppe von Abstahdshalteeinrichtungen (535, 635) bestehend aus:

   einem Bügel;
   einer Halterung für einen Metallstab;
   einer Halterung für ein Seil;
   einem Flansch;
   einer Behälterwand;
   einer Wandung eines Hohlleiters; und
   einem Isolator.

5. Messvorrichtung (505, 605, 733, 831, 902) nach einem der Ansprüche 1 bis 4, wobei der erste Wellenführeinrichtung (531, 505, 605, 731) und die zweite Wellenführeinrichtung (532, 632, 732) koaxial angeordnet sind.

6. Messvorrichtung (505, 605, 733, 831, 902) nach einem der Ansprüche 1 bis 5, wobei die erste Wellenführeinrichtung (531, 505, 605, 731) und/oder zweite Wellenführeinrichtung (532, 632, 732) ein Ende aufweist;
   wobei durch dieses Ende eine Bezugslinie im Wesentlichen senkrecht zu einer Ausbreitungsrichtung der elektromagnetischen Welle verläuft;
   wobei die erste Einkoppeleinrichtung (510, 734) und die zweite Einkoppeleinrichtung (504,631, 735) in dem im Wesentlichen gleichen Abstand bezogen auf diese Bezugslinie angeordnet sind.

7. Messvorrichtung (505, 605, 733, 831, 902) nach einem der Ansprüche 1 bis 6, wobei die erste Einkoppeleinrichtung (510, 734) und/oder die zweite Einkoppeleinrichtung (504, 631, 735) zumindest eine Einkoppeleinrichtung ist, ausgewählt aus der Gruppe von Einkoppeleinrichtungen bestehend aus:

   einem Streifenleiter;
   einem induktiver Einkoppler;
   einem kapazitiver Einkoppler;
   einer Schleifenkopplung;
   einer Stiftkopplung; und
   einer Lochkopplung.

8. Messvorrichtung (505, 605, 733, 831, 902) nach einem der Ansprüche 1 bis 7, wobei die erste Einkoppeleinrichtung (510, 734) und/oder die zweite Einkoppeleinrichtung (504, 631, 735) eine Anschlusseinrichtung (536, 537, 636, 637) aufweist, wobei die Anschlusseinrichtung zumindest eine Anschlusseinrichtung ist, ausgewählt aus der Gruppe der Anschlusseinrichtungen bestehend aus:

   einem Hochfrequenzstecker;
   einem 50 Ohm Koaxialstecker;
   einer Hochfrequenzbuchse;
   einer 50 Ohm Koaxialbuchse;
   einem Hochfrequenzadapter;
   einem Zirkulator; und
   einem Richtkoppler.

9. Messvorrichtung (505, 605, 733, 831, 902) nach einem der Ansprüche 1 bis 8, wobei die Messvorrichtung (505, 605, 733, 831, 902) als eine Sonde für ein Füllsfandsmessgerät (501, 601, 70.1, 801, 901) und/oder für ein Grenzstandsmessgerät (501, 601, 701, 801, 901) ausgebildet ist.

10. Steuervorrichtung (530, 630, 730, 830, 930, 1010, 1020, 1030, 1040, 1050), aufweisend:

    eine Auswerteeinrichtung (508, 1011, 1033, 1043);
    eine erste Messeinrichtung (1012, 1012b, 1012c, 1012d, 1012e) zum Vermessen der Eigenschaften eines Mediums mit einer ersten Anschlusseinrichtung (536', 636', 1001');

eine zweite Messeinrichtung (1013, 1013b, 1013c, 1013d, 1013e) zum Vermessen der Eigenschaften eines Mediums mit einer zweiten Anschfusseinrichtung (537', 637', 1002);

eine Anschlussabstandshalteeinrichtung (535', 635', 1003);

einer Sammelschnittstelle (513, 836, 936, 1014);

wobei die erste Messeinrichtung (1012, 1012b, 1012c, 1012d, 1012e) und die zweite Messeinrichtung (1013, 1013b, 1013c, 1013d, 1013e) mit der Auswerteeinrichtung (508, 1011, 1033, 1043) verbunden sind;

wobei die erste Messeinrichtung zum Bereitstellen einer ersten elektromagnetischen Welle über die erste Anschlusseinrichtung (536', 636', 1001) für einen ersten Raumbereich einer ersten Wellen führeinrichtung (531, 731) eingerichtet ist; und

wobei die zweite Messeinrichtung zum Bereitstellen eines Messsignals zum Vermessen zumindest eines Teils der ersten Wellenführeinrichtung (531, 731) in einem zweiten Raumbereich über die zweite Anschlusseinrichtung (537', 637', 1002) eingerichtet ist;

wobei die erste Anschlusseinrichtung (536', 636', 1001) von der zweiten Anschlusseinrichtung (537', 637', 1002) mit der Anschlussabstandshalteeinrichtung (535', 635', 1003) beabstandet ist, so dass die erste elektromagnetische Welle in einem durch die Anschlussabstandshalteeinrichtung (535', 635', 1003) vorgebbaren Abstand von dem Messsignal bereitgestellt werden kann;

wobei die erste Messeinrichtung zum Bereitstellen eines ersten Messwerts einer ersten Messung mit der ersten elektromagnetischen Welle an die Auswerteeinrichtung (508, 1011, 1033, 1043) eingerichtet ist; und

wobei die zweite Messeinrichtung zum Bereitstellen eines zweiten Messwerts einer zweiten Messung mit dem Messsignal an die Auswerteeinrichtung (508, 1011, 1033, 1043) eingerichtet ist;

wobei die Auswerteeinrichtung (508, 1011, 1033, 1043) zum Umwandeln des ersten Messwerts und des zweiten Messwerts in einen gemeinsamen Messwert und zum Bereitstellen des gemeinsamen Messwerts an der Sammelschnittstelle (513, 836, 936, 1014) eingerichtet ist;

wobei das Messsignal eine zweite elektromagnetische Welle ist;

die Steuervorrichtung(530, 630, 730, 830, 930, 1010, 1020, 1030, 1040, 1050) weiter aufweisend:

einen gemeinsamen Generator (1051) zum Zrzeugen der ersten elektromagnetischen Welle und der zweiten elektromagnetischen Welle;

eine Verteileinrichtung (1052);

wobei die Verteileinrichtung (1052); Verteilen der ersten elektromagnetischen Welle an die erste Ansehlusseinrichtung (1001) und der zweiten elektromagnetischen Weile an die zweite Anschlusseinrichtung (1002) eingerichtet ist.

**11.** Messgerät (501, 601, 701, 801, 901) zur Füllstandmessung und/oder zur Grenzwertmessung, aufweisend:

eine Messvorrichtung (505, 605, 733, 831, 902) nach einem der Ansprüche 1 bis 9;

eine Steuervorrichtung (530, 630; 730, 830, 930, 1010, 1020, 1030, 1040, 1050) nach Anspruch 10;

wobei die Messvorrichtung mit der Steuervorrichtung verbunden ist.

**12.** Verfahren zum Betreiben einer Messvorrichtung (505, 605, 733, 831, 902) nach einem der Ansprüche 1 bis 9, aufweisend:

Generieren einer ersten elektromagnetischen Welle (511) und einer zweiten elektromagnetischen Welle (503, 639) in einem gemeinsamen Generator;

Bereitstellen der ersten elektromagnetischen Welle (511) in dem ersten Raumbereich (531, 731) der ersten Wellenführeinrichtung (531, 505, 605, 731) über eine erste Anschlusseinrichtung (536', 636'), wobei die erste Wellenführeinrichtung (531, 505, 605, 731) die erste elektromagnetische Welle (511) in dem ersten Raumbereich (531, 731) zum Medium hinführt;

Bereitstellen eines ersten Messwerts einer ersten Messung mit der ersten elektromagnetischen Welle (511) an eine Ausweiteeinrichtung;

Vermessen zumindest eines Teils der ersten Wellenführeinrichtung (531, 505, 605, 731) mit der Vermesseinrichtung (532, 632, 732) in dem zweiten Raumbereich (532, 732), welche eine zweite Anschlusseinrichtung (537', 637') aufweist, wobei die erste Anschlusseinrichtung (536', 636') von der zweiten Anschlusseinrichtung(537', 637') mit einer Anschlussabstandshalteeinrichtung (535', 635') beabstandet ist, das Vermessen umfassend

Bereitstellen der zweiten elektromagnetischen Welle (503, 639) mit der Vermesseinrichtung (532, 632, 732) an der zweiten Anschlusseinrichtung (537',637'), wobei die zweite Wellenführeinrichtung (532, 632, 732) die zweite elektromagnetische Welle (503, 639) in dem zweiten Raumbereich (532, 732) zum Medium hinführt, und Bereitstellen eines zweiten Messwerts einer Messung mit der zweiten elektromagnetischen Welle (503, 639) an die Auswerteeinrichtung ;

Umwandeln des ersten Messwerts und des zweiten Messwerts in einen gemeinsamen Messwert und Bereitstellen des gemeinsamen Messwerts an einer Sammelschnittstelle der Auswerteeinrichtung.

13. Verwendung der Messvorrichtung (505, 605, 733, 831, 902) nach einem der Ansprüche 1 bis 9 zur Emulsionsmessung.

14. Verwendung der Messvorrichtung (505, 605 831, 902) nach einem der Ansprüche 1 bis 9 zur Bestimmung von Medieneigenschaften.

**Claims**

1. A measuring apparatus (505, 605, 733, 831, 902) for determining characteristics of a medium, comprising:

   a first waveguide device (531, 505, 605, 731) with a first feed in device (510, 734) for carrying out a first measurement;
   a measuring device (532, 632, 732) for carrying out a second measurement;
   wherein the first waveguide device (531, 505, 605, 731) is adapted for dividing a container interior into at least one first spatial region (531, 731) and into a second spatial region (532, 732); and
   wherein the first waveguide device (531, 505, 605, 731) is adapted for guiding a first electromagnetic wave (511) in the first spatial region (531, 731), which first electromagnetic wave has been coupled into the first waveguide device (531, 731) via the first deed in device (510, 734);
   wherein the first waveguide device guides the first electromagnetic wave to the medium;
   wherein the measuring device (532, 632, 732) is adapted for carrying out the second measurement on the first waveguide device (531, 731) in the second spatial region (532, 732);
   wherein the first waveguide device (531, 505, 605, 731) is adapted for spacing apart the first feed in device (510, 734) of the first waveguide device (531, 505, 605, 731) from the measuring device (532, 632, 732) so that the first electromagnetic wave (511) can propagate in the first spatial region at a pre-determinable distance from the second spatial region provided for carrying out the second measurement by the measuring device (532, 632, 732);
   wherein the first spatial region differs from the second spatial region;
   wherein the measuring device (532, 632, 732) is a second waveguide device (532, 632, 732) with a second feed in device (504, 631, 735), wherein the second waveguide device (532, 632, 732) is adapted for guiding a second electromagnetic wave (503, 639) in the second spatial region, which second electromagnetic wave has been coupled into the second waveguide device (532, 632, 732) via the second feed in device (504, 631, 735);
   wherein the second waveguide device guides the second electromagnetic wave to the medium.

2. The measuring apparatus (505, 605, 733, 831, 902) according to claim 1, further comprising:

   a spacer device (535, 635);
   wherein the spacer device (535, 635) is adapted for spacing apart the first feed in device (510, 734) of the first waveguide device (531, 505, 605, 731) from the measuring device (532, 632, 732) so that the first electromagnetic wave (511) can propagate in the first spatial region at a pre-determinable distance from the second spatial region provided for carrying out the second measurement by the measuring device (532, 632, 732).

3. The measuring apparatus (505, 605, 733, 831, 902) according to claim 1 or 2, wherein the first waveguide device (531, 505, 605, 731) and/or the second waveguide device (532, 632, 732) are/is at least one waveguide device selected from the group of waveguide devices consisting of:

   a coaxial conductor;
   a hollow conductor;
   a hollow conductor comprising at least one opening;
   a guiding device for a microwave;
   a standpipe;
   a wire;
   a metal bar; and
   a cord.

4. Measuring apparatus (505, 605, 733, 831, 902) according to claim 2 or 3, wherein the spacer device (535, 635) is at least one spacer device (535, 635) selected from the group of spacer devices (535, 635) consisting of:

   a bracket;
   a holder for a metal bar;
   a holder for a cord;
   a flange;
   a container wall;

a wall of a waveguide; and
an isolator.

5. The measuring apparatus (505, 605, 733, 831, 902) according to any one of claims 1 to 4, wherein the first waveguide device (531, 505, 605, 731) and the second waveguide device (532, 632, 732) are arranged coaxially.

6. The measuring apparatus (505, 605, 733, 831, 902) according to any one of claims 1 to 5, wherein the first waveguide device (531, 505, 605, 731) and/or the second waveguide device (532, 632, 732) comprise/comprises an end; wherein through this end a reference line extends so as to be essentially perpendicular to a direction of propagation of the electromagnetic wave; wherein the first feed in device (510, 734) and the second feed in device (504, 631, 735) arc arranged in the essentially equal space relative to this reference line.

7. The measuring apparatus (505, 605, 733, 831, 902) according to any one of claims 1 to 6, wherein the first feed in device (510, 734) and/or the second feed in device (504, 631, 735) are/is at least one feed in device selected from the group of feed in devices consisting of:

   a strip conductor;
   an inductive coupler;
   a capacitive coupler;
   a loop coupling;
   a pin coupling; and
   a hole coupling.

8. The measuring apparatus (505, 605, 733, 831, 902) according to any one of claims 1 to 7, wherein the first feed in device (510, 734) and/or the second feed in device (504, 631, 735) comprise/comprises a connection device (536, 537, 636, 637), wherein the connection device is at least one connection device selected from the group of connection devices consisting of:

   a high-frequency plug;
   a 50 Ohm coaxial plug;
   a high-frequency socket;
   a 50 Ohm coaxial socket;
   a high-frequency adapter;
   a circulator; and
   a directional coupler.

9. The measuring apparatus (505, 605, 733, 831, 902) according to any one of claims 1 to 8, wherein the measuring apparatus (505, 605, 733, 831, 902) is adapted as a probe for a fill-level measuring device (501, 601, 701, 801, 901) and/or for a limit-level measuring device (501, 601, 701, 801, 901).

10. A control apparatus (530, 630, 730, 830, 930, 1010, 1020, 1030, 1040, 1050), comprising:

   an evaluation device (508, 1011, 033, 1043);
   a first measuring device (1012, 1012b, 1012c, 1012d, 1012e) for measuring the characteristics of a medium with a first connection device (536', 636', 1001);
   a second measuring device (1013, 1013b, 1013c, 1013d, 1013e) for measuring the characteristics of a medium with a second connection device (537', 637', 1002);
   a connection spacer device (535', 635', 1003);
   a collective interface (513, 836, 936,1014);
   wherein the first measuring device (1012, 1412b, 1012c, 1012d, 1012e) and the second measuring device (1013, 1013b, 1013c, 1013d, 1013e) are connected to the evaluation device (508, 1011, 1033, 1043);
   wherein the first measuring device is adapted for providing a first electromagnetic wave via the first connection device (536', 636', 1001) for a first spatial region of a first waveguide device (531, 731); and
   wherein the second measuring device is adapted for providing a measuring signal for measuring at least part of the first waveguide device (531, 731) in a second spatial region via the second connection device (537', 637', 1002);
   wherein the first connection device (536', 636', 1001) is spaced apart from the second connection device (537', 637', 1002) by the connection spacer device (535', 635', 1003) so that the first electromagnetic wave can be provided at a distance from the measuring signal, which distance is pre-determinable by the connection spacer device (535', 635', 1003);
   wherein the first measuring apparatus is adapted for providing a first measured value of a first measurement with the first electromagnetic wave to the evaluation device (508, 1011, 1033, 1043); and
   wherein the second measuring apparatus is adapted for providing a second measured value of a second measurement with the measuring signal to the evaluation device (508, 1011, 1033, 1043);
   wherein the evaluation device (508, 1011, 1033, 1043) is adapted for converting the first measured value and the second measured value to a shared measured value and for providing the shared measured value at the collective interface (513, 836, 936, 1014);
   wherein the measuring signal is a second electromagnetic wave;
   the control apparatus (530, 630, 730, 830, 930, 1010, 1020, 1030, 1040, 1050) further comprising:

a shared generator (1051) for generating the first electromagnetic wave and the second electromagnetic wave;
a distribution device (1052);
wherein the distribution device (1052) is adapted for distributing the first electromagnetic wave to the first connection device (1001), and the second electromagnetic wave to the second connection device (1002).

11. A measuring device (501, 601, 701, 801, 901) for fill-level measuring and/or for limit-value measuring, comprising:

a measuring apparatus (505, 605, 733, 831, 902) according to any one of claims 1 to 9;
a control apparatus (530, 630, 730, 830, 930, 1010, 1020, 1030, 1040, 1050) according to claim 10;
wherein the measuring apparatus is connected to the control apparatus.

12. A method for operating a measuring apparatus (505, 605, 733, 831, 902) according to any one of claims 1 to 9, comprising:

generating a first electromagnetic wave (511) and a second electromagnetic wave (503, 639) in a common generator;
providing the first electromagnetic wave (511) in the first spatial region (531, 731) of the first waveguide device (531, 505, 605, 731) via a first connection device (536', 636');
wherein the first waveguide device (531, 505, 605, 731) guides the first electromagnetic wave (511) in the first spatial region (531, 731) to the medium;
providing a first measured value of a first measurement with the first electromagnetic wave (511) at an evaluation device;
measuring at least part of the first waveguide device (531, 505, 605, 731) with the measuring device (532, 632, 732) in the second spatial region (532, 732) that comprises a second connection device (537', 637'),
wherein the first connection device (536', 636') is spaced apart from the second connection device (537', 637') by a connection spacer device (535', 635'), the measuring comprising:

providing the second electromagnetic wave (503, 639) with the measuring device (532, 632, 732) at the second connection device (537', 637'),

wherein the second waveguide device (532, 632, 732) guides the second electromagnetic wave (503, 639) in the second spatial region (532, 732) to the medium, and providing a second measured value of a measurement with the second electromagnetic wave (503, 639) to the evaluation device;
converting the first measured value and the second measured value to a shared measured value and providing the shared measured value at a collective interface of the evaluation device.

13. The use of the measuring apparatus (505, 605, 733, 831, 902) according to any one of claims 1 to 9 for emulsion measuring.

14. The use of the measuring apparatus (505, 605, 733, 831, 902) according to any one of claims 1 to 9 for determining media characteristics.

## Revendications

1. Dispositif de mesure (505, 605, 733, 831, 902) pour la détermination de propriétés d'un fluide, comprenant :

un premier système de guide d'ondes (531, 505, 605, 731) avec un premier dispositif de couplage (510, 734) pour la mise en oeuvre d'une première mesure ;
un dispositif de mesurage (532, 632, 732) pour la mise en oeuvre d'une seconde mesure ;
le premier système de guide d'ondes (531, 505, 605, 731) étant conçu pour subdiviser un espace intérieur de récipient en au moins une première zone spatiale (531, 731) et en une seconde zone spatiale (532, 732) ; et
le premier système de guide d'ondes (531, 505, 605, 731) étant conçu pour guider une première onde électromagnétique (511) dans la première zone spatiale (531, 731), laquelle onde a été couplée par l'intermédiaire du premier dispositif de couplage (510, 734) dans le premier système de guide d'ondes (531, 731) ;
le premier système de guide d'ondes guidant la première onde électromagnétique en direction du fluide ;
le dispositif de mesurage (532, 632, 732) étant conçu pour la mise en oeuvre de la seconde mesure sur le premier système de guide d'ondes (531, 731) dans la seconde zone spatiale (532, 732) ;
le premier système de guide d'ondes (531, 505, 605, 731) étant conçu pour mettre à distance le premier dispositif de couplage (510, 734) du premier système de guide d'ondes (531, 505, 605, 731) et le dispositif de mesurage (532, 632, 732), de sorte que la première onde électromagnétique (511) peut se propager dans la première zone spatiale à une distance prédéfinissable de la seconde zone spatiale prévue pour la mise en oeuvre de la seconde mesure par le dispositif de mesurage (532, 632, 732) ;

la première zone spatiale étant différente de la seconde zone spatiale ;

le dispositif de mesurage (532, 632, 732) étant un second système de guide d'ondes (532, 632, 732) avec un second dispositif de couplage (504, 631, 735), le second système de guide d'ondes (532, 632, 732) étant conçu pour guider une seconde onde électromagnétique (503, 639) dans la seconde zone spatiale, laquelle onde a été couplée par l'intermédiaire du second dispositif de couplage (504, 631, 735) dans le second système de guide d'ondes (532, 632, 732) ;

le second système de guide d'ondes guidant la seconde onde électromagnétique en direction du fluide.

2.  Dispositif de mesure (505, 605, 733, 831, 902) selon la revendication 1, comprenant en outre :

    un système d'écartement (535, 635) ;
    le système d'écartement (535, 635) étant conçu pour mettre à distance le premier dispositif de couplage (510, 734) du premier système de guide d'ondes (531, 505, 605, 731) et le dispositif de mesurage (532, 632, 732), de sorte que la première onde électromagnétique (511) peut se propager dans la première zone spatiale à une distance prédéfinissable de la seconde zone spatiale prévue pour la mise en oeuvre de la seconde mesure par le dispositif de mesurage (532, 632, 732).

3.  Dispositif de mesure (505, 605, 733, 831, 902) selon l'une des revendications et 2, le premier système de guide d'ondes (531, 505, 605, 731) et/ou le second système de guide d'ondes (532, 632, 732) étant au moins un système de guide d'ondes, sélectionné parmi le groupe de systèmes de guide d'ondes constitué de :

    un conducteur coaxial ;
    un conducteur creux ;
    un conducteur creux muni d'au moins une ouverture ;
    un dispositif de guidage pour une microonde ;
    un tube ;
    un fil ;
    une barre métallique, et
    un câble.

4.  Dispositif de mesure (505, 605, 733, 831, 902) selon l'une des revendications 2 et 3, le système d'écartement (535, 635) étant au moins un système d'écartement (535, 635), sélectionné parmi le groupe de systèmes d'écartement (535, 635) constitué de :

    un étrier ;
    une fixation pour une barre métallique,
    une fixation pour un câble ;
    une bride ;
    une paroi de récipient ;
    une paroi d'un conducteur creux ; et
    un isolateur.

5.  Dispositif de mesure (505, 605, 733, 831, 902) selon l'une des revendications 1 à 4, le premier système de guide d'ondes (531, 505, 605, 731) et le second système de guide d'ondes (532, 632, 732) ayant une disposition coaxiale.

6.  Dispositif de mesure (505, 605, 733, 831, 902) selon l'une des revendications 1 à 5, le premier système de guide d'ondes (531, 505, 605, 731) et/ou le second système de guide d'ondes (532, 632, 732) présentant une extrémité ;

    une ligne de référence s'étendant au travers de cette extrémité de façon essentiellement perpendiculaire à une direction de propagation de l'onde électromagnétique ;

    le premier dispositif de couplage (510, 734) et le second dispositif de couplage (504, 631, 735) étant disposés à distance essentiellement égale par rapport à cette ligne de référence.

7.  Dispositif de mesure (505, 605, 733, 831, 902) selon l'une des revendications 1 à 6, le premier dispositif de couplage (510, 734) et/ou le second dispositif de couplage (504, 631, 735) étant au moins un dispositif de couplage, sélectionné parmi le groupe de dispositifs de couplage constitué de :

    un guide d'ondes à rubans ;
    un coupleur inductif ;
    un coupleur capacitif ;
    un couplage à boucle ;
    un couplage par tiges; et
    un couplage à trous.

8.  Dispositif de mesure (505, 605, 733, 831, 902) selon l'une des revendications 1 à 7, le premier dispositif de couplage (510, 734) et/ou le second dispositif de couplage (504, 631, 735) présentant un dispositif de jonction (536, 537, 636, 637), le dispositif de jonction étant au moins un dispositif de jonction, sélectionné parmi le groupe des dispositifs de jonction constitué de :

    un connecteur haute fréquence ;

une fiche coaxiale 50 ohms ;
une douille haute fréquence ;
une douille coaxiale 50 ohms ;
un adaptateur haute fréquence ;
un circulateur ; et
un coupleur directionnel.

9. Dispositif de mesure (505, 605, 733, 831, 902) selon l'une des revendications 1 à 8, le dispositif de mesure (505, 605, 733, 831, 902) étant réalisé sous forme d'une sonde pour un appareil de mesure de niveau (501, 601, 701, 801, 901) et/ou pour un appareil de mesure d'état limite (501, 601, 701, 801, 901).

10. Dispositif de commande (530, 630, 730, 830, 930, 1010, 1020, 1030, 1040, 1050), comprenant :

    un dispositif d'évaluation (508, 1011, 1033, 1043) ;
    un premier dispositif de mesure (1012, 1012b, 1012c, 1012d, 1012e) pour le mesurage des propriétés d'un fluide avec un premier dispositif de jonction (536', 636', 1001) ;
    un second dispositif de mesure (1013, 1013b, 1013c, 1013d, 1013e) pour le mesurage des propriétés d'un fluide avec un second dispositif de jonction (537', 637', 1002) ;
    un système d'écartement de jonctions (535', 635', 1003) ;
    une interface collectrice (513, 836, 936, 1014) ;
    le premier dispositif de mesure (1012, 1012b, 1012c, 1012d, 1012e) et le second dispositif de mesure (1013, 1013b, 1013c, 1013d, 1013e) étant reliés au dispositif d'évaluation (508, 1011, 1033, 1043) ;
    le premier dispositif de mesure étant conçu pour transmettre une première onde électromagnétique au premier système de guide d'ondes (531, 731), à travers le premier dispositif de jonction (536', 636', 1001), pour une première zone spatiale ; et
    le second dispositif de mesure étant conçu pour transmettre un signal de mesure pour le mesurage d'au moins une partie du premier système de guide d'ondes (531, 731) dans une seconde zone spatiale, à travers le second dispositif de jonction (537', 637', 1002) ;
    le premier dispositif de jonction (536', 636', 1001) étant mis à distance du second dispositif de jonction (537', 637', 1002) par le système d'écartement de jonctions (535', 635', 1003), de sorte que la première onde électromagnétique peut être transmise à une distance, prédéfinissable par le système d'écartement de jonctions (535', 635', 1003), du signal de mesure ;
    le premier dispositif de mesure étant conçu pour transmettre au dispositif d'évaluation (508, 1011, 1033, 1043) une première valeur de mesure d'une première mesure par la première onde électromagnétique ; et
le second dispositif de mesure étant conçu pour transmettre au dispositif d'évaluation (508, 1011, 1033, 1043) une seconde valeur de mesure d'une seconde mesure par le signal de mesure ;
le dispositif d'évaluation (508, 1011, 1033, 1043) étant conçu pour convertir la première valeur de mesure et la seconde valeur de mesure en une valeur de mesure commune et pour transmettre la valeur de mesure commune à l'interface collectrice (513, 836, 936, 1014) ;
le signal de mesure étant une seconde onde électromagnétique ;
le dispositif de commande (530, 630, 730, 830, 930, 1010, 1020, 1030, 1040, 1050) comprenant en outre :

    un générateur commun (1051) pour générer la première onde électromagnétique et la seconde onde électromagnétique ;
    un dispositif de répartition (1052) ;
    le dispositif de répartition (1052) étant conçu pour répartir la première onde électromagnétique aux bornes du premier dispositif de jonction (1001) et la seconde onde électromagnétique aux bornes du second dispositif de jonction (1002).

11. Appareil de mesure (501, 601, 701, 801, 901) pour la mesure de niveau et/ou pour la mesure de valeur limite, comprenant :

    un dispositif de mesure (505, 605, 733, 831, 902) selon l'une des revendications 1 à 9 ;
    un dispositif de commande (530, 630, 730, 830, 930, 1010, 1020, 1030, 1040, 1050) selon la revendication 10 ;
    le dispositif de mesure étant relié au dispositif de commande.

12. Procédé de fonctionnement d'un dispositif de mesure (505, 605, 733, 831, 902) selon l'une des revendications 1 à 9, comprenant :

    la génération d'une première onde électromagnétique (511) et d'une seconde onde électromagnétique (503, 639) dans un générateur commun ;
    la transmission de à première onde électromagnétique (511) dans la première zone spatiale (531, 731) du premier système de guide d'ondes (531, 505, 605, 731) à travers un premier dispositif de jonction (536', 636'), le premier système de guide d'ondes (531, 505, 605, 731) guidant la première onde électromagnétique (511) dans la première zone spatiale (531, 731) en direction du fluide ;

transmission à un dispositif d'évaluation d'une première valeur de mesure d'une première mesure par la première onde électromagnétique (511) ;

mesurage d'au moins une partie du premier système de guide d'ondes (531, 505, 605, 731) par le dispositif de mesurage (532, 632, 732) dans la seconde zone spatiale (532, 732), lequel présente un second dispositif de jonction (537', 637'), le premier dispositif de jonction (536', 636') étant mis à distance du second dispositif de jonction (537', 637') par un système d'écartement de jonctions (535', 635'), le mesurage comprenant :

la transmission de la seconde onde électromagnétique (503, 639) par le dispositif de mesurage (532, 632, 732) au second dispositif de jonction (537', 637'), le second système de guide d'ondes (532, 632, 732) guidant la seconde onde électromagnétique (503, 639) dans la seconde zone spatiale (532, 732) en direction du fluide, et

la transmission au dispositif d'évaluation d'une seconde valeur de mesure d'une mesure par la seconde onde électromagnétique (503, 639) ;

la conversion de la première valeur de mesure et de la seconde valeur de mesure en une valeur de mesure commune et la transmission de la valeur de mesure commune à une interface collectrice du dispositif d'évaluation.

13. Utilisation du dispositif de mesure (505, 605, 733, 831, 902) selon l'une des revendications 1 à 9 pour la mesure d'émulsion.

14. Utilisation du dispositif de mesure (505, 605, 733, 831, 902) selon l'une des revendications 1 à 9 pour la détermination de propriétés de fluides.

Fig. 1

Fig. 2

Fig. 3

Fig. 4

Fig. 5

Fig. 6

513   701

703

730

702

734
731
732

735
704
705

506

709
707

706   708   106

733

Fig. 7

836

801

835

830

531   832

831

833

834

Fig. 8

Fig. 10A

1014
1011
1010
1012
1013
A
B

Fig. 10B

1014
1027
1020
1025
1023
1024
1026
1021
1003
1022
1012b
1013b
A 1001 B
1002

Fig. 10C

1037
1033
1031
1032
1030
1003
1012c
1013c
A 1001 B
1002

Fig. 10D

1043
1037
1041
1042
1003
1040
1012d
1013d
A 1001 B
1002

Fig. 10E

1037
1051
1050
1052
1012e
1013e
A 1001 B
1003 1002

Fig. 9

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007061574 A1
- DE 10103056 A1
- DE 102007042043 A1
- US 7334451 B1

**In der Beschreibung aufgeführte Nicht-Patentliteratur**

- **PETER DEVINE.** Radar level measurement - The users guide. *VEGA Controls,* 2000, ISBN 0-9538920-0-X